# EUROPEAN PATENT APPLICATION

(11) **EP 4 625 089 A1**
(43) Date of publication of application: **01.10.2025**
(21) Application number: 25162973.9
(22) Date of filing: 11.03.2025
(51) Int. Cl.: G05D 1/65, G05D 1/82, A01B 69/00, B60W 30/00, G05D 107/20, G05D 109/10

(54) **TRAVEL CONTROL METHOD, TRAVEL CONTROL PROGRAM, AND TRAVEL CONTROL SYSTEM FOR WORK VEHICLE, AND WORK VEHICLE**

(30) Priority: 25.03.2024 JP 2024047617
(71) Applicant: Yanmar Holdings Co., Ltd., Osaka-shi, Osaka (JP)
(72) Inventor: KANO, Tomohisa, Osaka (JP); HOMMA, Terasu, Osaka (JP); OTA, Kohei, Osaka (JP)
(74) Representative: Novagraaf International SA

(57) **Abstract**

[Problem] To provide a travel control method, a travel control program, and a travel control system for a work vehicle, and a work vehicle that is less likely to slip during travel.

[Solution] A travel control method for a work vehicle 1 includes: acquiring a slip condition related to a slip that occurs during travel of the work vehicle 1; and changing an acceleration upper limit value that is an upper limit value of acceleration until a vehicle speed of the work vehicle 1 reaches a target speed.

## Description

### TECHNICAL FIELD

The present invention relates to a travel control method, a travel control program, and a travel control system for a work vehicle, and to a work vehicle, the travel control method, the travel control program, and the travel control system controlling travel of the work vehicle.

### BACKGROUND ART

In the related art, a travel control system (an automatic travel system) that causes a work vehicle to travel automatically along a target route at a work site has been proposed (for example, see Patent Document 1). In the travel control system according to the related art, the work vehicle travels automatically in a predetermined row order while performing predetermined work on work objects that are arranged in rows at the work site. The work vehicle performs spraying work as the predetermined work. In the spraying work, the work vehicle sprays a spray material such as a chemical solution or water on crops (work objects) that are planted in a field (a work site).

In the related art, information, such as a vehicle speed of the work vehicle during the work, is set by a manipulator who manipulates a manipulation terminal to register the information. Furthermore, when the work vehicle is traveling automatically, the manipulation terminal can receive a state of the work vehicle, such as a travel speed, from the work vehicle and display the state of the work vehicle on a manipulation display section.

### PRIOR ART DOCUMENT

### PATENT DOCUMENT

Patent Document 1: Japanese Unexamined Patent Application Publication No. 2022-183962

### SUMMARY OF INVENTION

### TECHNICAL PROBLEM

In the above related art, an upper limit value of acceleration at the time of accelerating or decelerating the work vehicle is a fixed value. Thus, for example, when the work vehicle is accelerated rapidly in the field (the work site) under a steep road surface condition or a slippery road surface condition due to pebbles, mud, or the like, a crawler possibly idles (slips), leading to route deviation, getting stuck, or the like.

An objection of the present invention is to provide a travel control method, a travel control program, and a travel control system for a work vehicle, and a work vehicle, the travel control method, the travel control program, and the travel control system suppressing a slip of the work vehicle during travel.

### SOLUTION TO PROBLEM

A travel control method for a work vehicle according to an aspect of the present invention includes: acquiring a slip condition related to a slip that occurs during travel of a work vehicle; and changing an acceleration upper limit value according to the slip condition, the acceleration upper limit value being an upper limit value of acceleration until a vehicle speed of the work vehicle reaches a target speed.

A travel control program according to another aspect of the present invention is a work vehicle control program for causing one or more processors to execute the travel control method for a work vehicle.

A travel control system according to further another aspect of the present invention includes an acquisition processing section and a change processing section. The acquisition processing section acquires a slip condition related to a slip that occurs during travel of a work vehicle. The change processing section changes an acceleration upper limit value according to the slip condition, the acceleration upper limit value being an upper limit value of acceleration until a vehicle speed of the work vehicle reaches a target speed.

A work vehicle according to further another aspect of the present invention includes the travel control system and a travel section that is controlled by the travel control system.

### ADVANTAGEOUS EFFECTS OF INVENTION

The present invention can provide the travel control method, the travel control program, and the travel control system for a work vehicle, and the work vehicle that is less likely to slip.

### BRIEF DESCRIPTION OF DRAWINGS

FIG. 1 is an external view of a work vehicle according to a first embodiment that is seen from a front left side.
FIG. 2 is an external view of a back surface of the work vehicle according to the first embodiment that is seen from a back surface side.
FIG. 3 is a view illustrating an example of crop rows for which the work vehicle according to the first embodiment is used.
FIG. 4 is a schematic view illustrating an overall configuration of an automatic work system using the work vehicle according to the first embodiment.
FIG. 5 is a schematic block diagram illustrating a main configuration of the automatic work system according to the first embodiment.
FIG. 6 is an external view of a left surface of the work vehicle according to the first embodiment that is seen from a left side.
FIG. 7 is an external view of a right surface of the work vehicle according to the first embodiment that is seen from a right side.
FIG. 8 is an external view of an upper surface of the work vehicle according to the first embodiment that is seen from above.
FIG. 9 is an external view of the back surface of the work vehicle according to the first embodiment that is seen from the back surface side.
FIG. 10 is a schematic view illustrating a state where the work vehicle according to the first embodiment is seen obliquely from the rear.
FIG. 11 is a schematic view illustrating operation of automatic travel of the work vehicle according to the first embodiment.
FIG. 12 is a schematic view illustrating, in particular, non-turning reciprocating travel operation during the automatic travel of the work vehicle according to the first embodiment.
FIG. 13 is a schematic view illustrating, in particular, the non-turning reciprocating travel operation during the automatic travel of the work vehicle according to the first embodiment.
FIG. 14 is a graph illustrating an example of a relationship between an inclination angle of a field and shearing stress in regard to the automatic travel of the work vehicle according to the first embodiment.
FIG. 15 is a graph illustrating an example of a relationship between acceleration and the inclination angle of the field in regard to the automatic travel of the work vehicle according to the first embodiment.
FIG. 16 is a schematic view illustrating uphill travel operation in a steep field upon the automatic travel of the work vehicle according to the first embodiment.
FIG. 17 is a schematic view illustrating an example of an acceleration adjustment screen that can be displayed by a travel control system according to the first embodiment.
FIG. 18 is a graph illustrating an example of a relationship between the acceleration and the inclination angle of the field in regard to the automatic travel of the work vehicle according to the first embodiment.
FIG. 19 includes schematic views, each of which illustrates returning operation during the automatic travel of the work vehicle according to the first embodiment.
FIG. 20 includes schematic views, each of which illustrates the returning operation during the automatic travel of the work vehicle according to the first embodiment.
FIG. 21 includes schematic views, each of which illustrates the returning operation during the automatic travel of the work vehicle according to the first embodiment.
FIG. 22 is a schematic view illustrating the returning operation during the automatic travel of the work vehicle according to the first embodiment.
FIG. 23 includes schematic views, each of which illustrates an example of a route display screen that can be displayed by the travel control system according to the first embodiment.
FIG. 24 includes schematic views, each of which illustrates an example of the route display screen that can be displayed by the travel control system according to the first embodiment.
FIG. 25 includes schematic views, each of which illustrates an example of the route display screen that can be displayed by the travel control system according to the first embodiment.
FIG. 26 includes schematic views, each of which illustrates an example of the route display screen that can be displayed by the travel control system according to the first embodiment.

### DESCRIPTION OF EMBODIMENTS

Hereinafter, an embodiment of the present invention will be described with reference to the accompanying drawings. The following embodiment is an example that embodies the present invention and is not intended to limit the technical scope of the present invention.

### (First Embodiment)

### [1] Overall Configuration

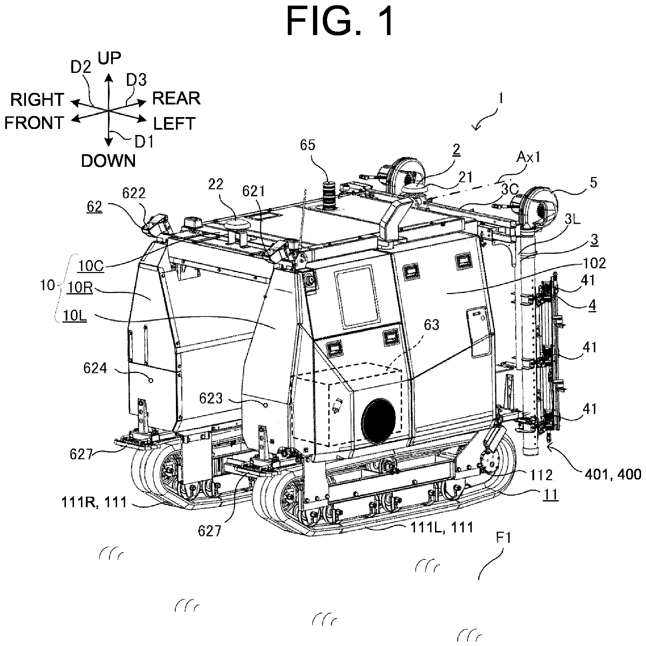

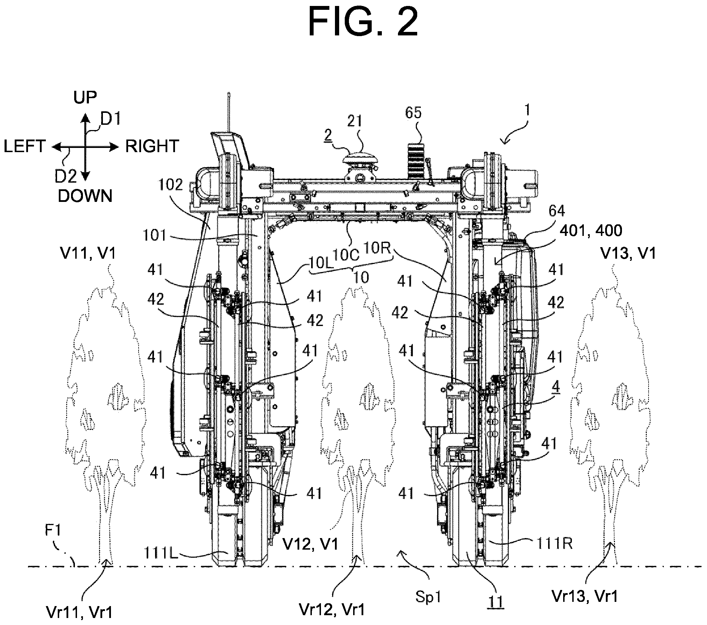

First, a description will be made on an overall configuration of a work vehicle 1 according to the present embodiment with reference to FIG. 1 to FIG. 5. In the present embodiment, the work vehicle 1 performs, for example, spraying work or weeding work. In the spraying work, the work vehicle 1 sprays a spray material, such as a chemical solution, water, or a fertilizer, to a crop V1 (see FIG. 2) that is grown in a field F1. In the weeding work, the work vehicle 1 removes weeds around the crop V1. At a work site such as the field F1, the work vehicle 1 performs any of various types of the work while traveling automatically along a target route.

That is, the work vehicle 1 is configured to be able to perform the spraying work or the weeding work as the work. A work machine 400 can be attached to/detached from (a machine body 10 of) the work vehicle 1. The work that can be performed by the work vehicle 1 varies by a type of the work machine 400 attached to the work vehicle 1. In other words, the work machine 400 that corresponds to the work to be performed by the work vehicle 1 is attached to (the machine body 10 of) the work vehicle 1.

In the present embodiment, at least a sprayer 401 is available as the work machine 400 that can be attached to the work vehicle 1. In addition thereto, the work machine 400 such as a weeder can be attached to the work vehicle 1. In a state where the sprayer 401 is attached as the work machine 400 to the machine body 10, the work vehicle 1 can perform the spraying work. Meanwhile, in a state where the weeder is attached as the work machine 400 to the machine body 10, the work vehicle 1 can perform the weeding work.

Examples of the "work vehicle" described in the present invention include work vehicles, such as a tractor, a rice transplanter, a sprayer, a seeder, a transplanter, and a combine, that perform various types of work, in addition to the work vehicle that performs the spraying work or the weeding work. Furthermore, the "work vehicle" described in the present invention is not limited to an agricultural machine (a farm machine) and may be a construction machine (a building machine), for example.

The "field" described in the present invention is an example of the work site where the work vehicle 1 performs any of various types of the work, such as the spraying work, while moving. Examples of the "field" include an orchard, a pasture, a rice field, and a crop field where agricultural products are grown. In this case, the crop V1 that is grown in the field F1 is the agricultural product. Furthermore, in the case where a plant is grown in a planting field, the planting field is the field F1. In a case where a tree for wood is grown in a forest as in forestry, the forest is the field F1. In this case, the crop V1 grown in the field F1 is the plant, the tree, or the like. However, the work site where the work vehicle 1 performs the work is not limited to the field F1, and may be other than the field F1. For example, when the work vehicle 1 is the construction machine, a site where the construction machine performs the work is the work site.

In the present embodiment, as an example, it is assumed that the work vehicle 1 performs the work on the crop V1 grown in the field F1 while moving in the field F1 that is an orchard such as a grape orchard or an apple orchard. The crop V1 is an example of a work object on which the work vehicle 1 performs the work such as the spraying work, and is a grape tree, for example.

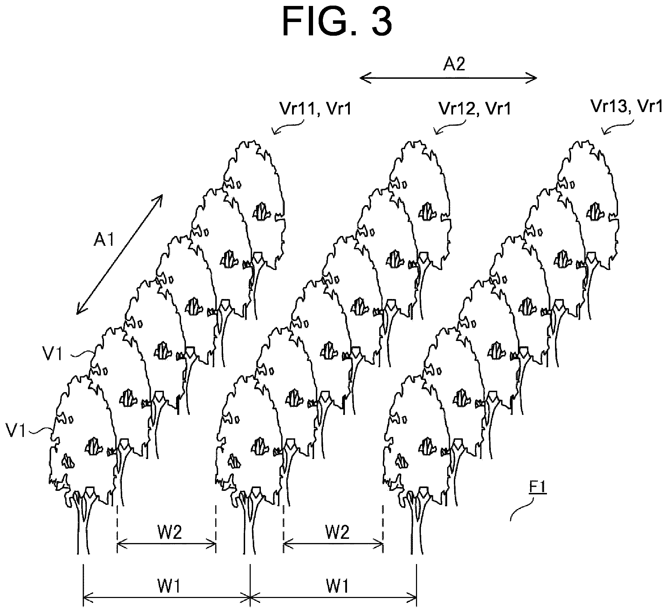

In the field F1, the crops V1 are arranged in rows at predetermined intervals. More specifically, as illustrated in FIG. 3, the plural crops V1 are planted in a linearly arranged manner in a length direction A1 in a plan view. The plural crops V1 that are linearly arranged in the length direction A1 constitute a crop row Vr1. FIG. 3 illustrates an example of the three crop rows Vr1, each of which includes the six crops V1 arranged in the length direction A1. The crop rows Vr1 are arranged at a predetermined pitch W1 in a width direction A2. Accordingly, a work path that has a width W2 (< W1) corresponding to the interval between the crop rows Vr1 and extends along the length direction A1 is formed between the adjacent crop rows Vr1. The work vehicle 1 sprays the spray material (the chemical solution) to the crops V1 while moving (traveling) in the length direction A1 through this work path. The crop row Vr1 is an example of a work target row that includes the plural crops V1 (work objects), and the plural work target rows are arranged in the field F1.

In a state where the sprayer 401 is attached as the work machine 400, the work vehicle 1 sprays the chemical solution to the crop V1. In this case, the chemical solution is an example of the spray material, and the crop V1 to which the spray material (the chemical solution) is sprayed is an example of a spray object. The term "chemical solution" as the spray material described herein is an agricultural chemical used to improve efficiency of agriculture or preservation of agricultural products, and examples thereof include herbicides, fungicides, antifungal agents, insecticides, rodenticides, and growth promoters and germination inhibitors for the crop V1.

As will be described below in detail, the work vehicle 1 that travels in the field F1 includes the machine body 10 in a gate-like shape. More specifically, the machine body 10 includes: a first block 10L and a second block 10R that are arranged side by side in a right-left direction D2; and a coupling section 10C that couples upper end portions of the first block 10L and the second block 10R. Thus, the machine body 10 has the gate-like shape surrounding three sides that are a left side, a right side, and an upper side of a space Sp1 with the first block 10L, the second block 10R, and the coupling section 10C. That is, the space Sp1 that is opened in a front-rear direction D3 is provided inside the machine body 10.

Furthermore, the work vehicle 1 includes a travel section 11 that includes a pair of crawlers 111L, 111R arranged in the right-left direction D2. The paired crawlers 111L, 111R are provided in lower portions of the first block 10L and the second block 10R, respectively, and are located on both sides of the space Sp1 in the right-left direction D2.

As illustrated in FIG. 2, while traveling in a posture of straddling the single crop row Vr1 by the gate-shaped machine body 10, the work vehicle 1 can perform the work (the spraying work or the like) on the crops V1 in this crop row Vr1 and the crops V1 in the crop row Vr1 adjacent to this crow row Vr1. In other words, the work vehicle 1 can travel in a manner to allow the crop V1 as the work object to pass through the space Sp1 inside the gate-shaped machine body 10. That is, as illustrated in FIG. 2, when crop rows Vr11, Vr12, Vr13 as the three work target rows are arranged in the right-left direction D2, the work vehicle 1 can travel by straddling any Vr1 of these three crop rows Vr11, Vr12, Vr13 by the machine body 10.

Here, when the machine body 10 straddles the central crop row Vr12, the first block 10L travels on the work path between the leftmost crop row Vr11 and the crop row Vr12, and the second block 10R travels on the work path between the rightmost crop row Vr13 and the crop row Vr12. At this time, in a state where the sprayer 401 is attached as the work machine 400, the work vehicle 1 can simultaneously spray the spray material (the chemical solution) to crops V11 in the crop row Vr11, crops V12 in the crop row Vr12, and crops V13 in the crop row Vr13. Just as described, during travel, the work vehicle 1 according to the present embodiment can simultaneously spray the spray material (the chemical solution) to the spray objects (the crops V1) in the three rows. Thus, the spraying work is more efficient than the spraying work in a configuration in which the spray material is sprayed by one row.

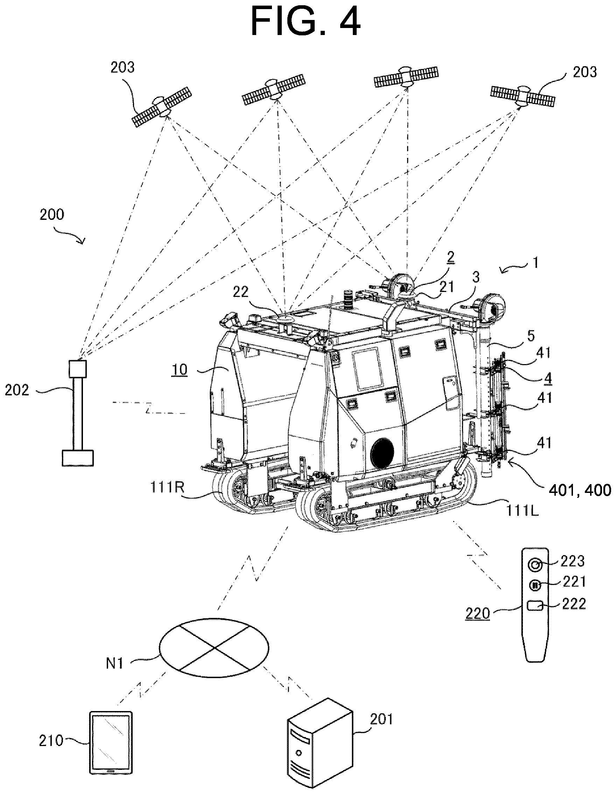

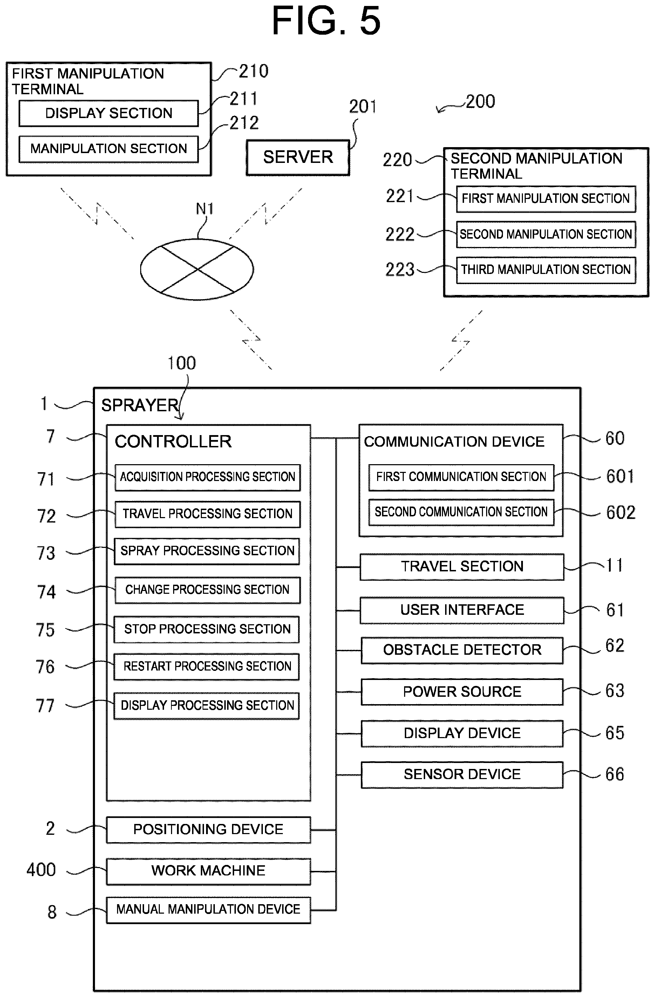

Furthermore, in the present embodiment, as an example, the work vehicle 1 is an unmanned vehicle that is operated by automatic driving without relying on a manipulation (including a remote manipulation) by a person (a manipulator). Thus, as illustrated in FIG. 4 and FIG. 5, the work vehicle 1 constitutes an automatic work system 200 together with a first manipulation terminal 210, a second manipulation terminal 220, a server 201, a base station 202, a satellite 203, and the like. In other words, the automatic work system 200 includes the work vehicle 1, the first manipulation terminal 210, the second manipulation terminal 220, the server 201, the base station 202, and the satellite 203. However, at least one of the first manipulation terminal 210, the second manipulation terminal 220, the server 201, the base station 202, and the satellite 203 may not be included in components of the automatic work system 200. For example, the automatic work system 200 may not include the server 201, the base station 202, and the satellite 203.

The work vehicle 1, the first manipulation terminal 210, the second manipulation terminal 220, and the server 201 are mutually communicable. The term "communicable" described in the present invention means that information can be exchanged directly or indirectly via a communication network (network) N1, a relay, or the like, by an appropriate communication method such as wired communication or wireless communication (communication using radio waves or light as media). For example, the work vehicle 1 and the first manipulation terminal 210 can communicate with each other via the communication network N1 such as the Internet, a local area network (LAN), a wide area network (WAN), a public phone line, a cellular phone line network, a packet line network, or a wireless LAN. Here, each of the work vehicle 1 and the first manipulation terminal 210 is wirelessly connected to the communication network N1. Thus, the communication between the work vehicle 1 and the first manipulation terminal 210 at least includes the wireless communication. In addition, each of the work vehicle 1 and the first manipulation terminal 210 can wirelessly communicate with the server 201 via the communication network N1.

The satellite 203 is a positioning satellite that constitutes a satellite positioning system such as a global navigation satellite system (GNSS), and transmits a GNSS signal (a satellite signal). The base station 202 is a reference point (a reference station) that constitutes the satellite positioning system. The base station 202 transmits, to the work vehicle 1, correction information for calculating a current position of the work vehicle 1, and the like.

The work vehicle 1 according to the present embodiment includes a positioning device 2 that detects the current position (latitude, longitude, altitude, and the like), a current azimuth, and the like of the machine body 10. The positioning device 2 executes positioning processing to identify (calculate) the current position, the current azimuth, and the like of the machine body 10 by using the GNSS signal that is transmitted from the satellite 203. The positioning device 2 adopts, for example, a relatively high-accurate positioning method such as real-time kinematic (RTK) positioning. In the RTK positioning, the position is determined on the basis of positioning information (the GNSS signal or the like) received by two receivers (the base station 202 and an antenna 21) and the correction information generated by the base station 202.

The first manipulation terminal 210 is a general-purpose information processor, such as a smartphone or a tablet terminal, that can be carried by the manipulator. The first manipulation terminal 210 is configured to enable the remote manipulation of the work vehicle 1 by outputting (transmitting), to the work vehicle 1, at least a stop instruction (a temporary stop instruction) for stopping automatic travel of the work vehicle 1 in response to a manipulation by the manipulator. Here, as long as being in an environment where connection to (communication with) the communication network N1 is enabled, the first manipulation terminal 210 wirelessly communicates with the work vehicle 1 via the communication network N1, and can thereby control the work vehicle 1 even at a distance from the work vehicle 1, that is, at a remote position in the field F1.

As illustrated in FIG. 5, the first manipulation terminal 210 includes: a display section 211 that displays various types of information; and a manipulation section 212 that accepts a manipulation. The display section 211 includes a liquid-crystal display or an organic EL display, for example. The manipulation section 212 includes, for example, a touch panel, a physical switch, a mouse, or a keyboard. In the present embodiment, as an example, the display section 211 including the liquid-crystal display and the manipulation section 212 including the touch panel are integrated to constitute a touch panel display. Thus, by manipulating the manipulation section 212 in a manipulation screen that is displayed on the display section 211, the manipulator can output, for example, the stop instruction (the temporary stop instruction) to the work vehicle 1 from the first manipulation terminal 210.

Furthermore, the first manipulation terminal 210 has a function to set (register) various types of information on control of the work vehicle 1, such as the target route for the automatic travel of the work vehicle 1. That is, the manipulator can set the target route and the like by manipulating the manipulation section 212 in the manipulation screen that is displayed on the display section 211. The information, such as the target route, that is set herein is transmitted to the work vehicle 1 directly or indirectly via the server 201 or the like, and is used for the automatic travel of the work vehicle 1.

In addition, during the automatic travel of the work vehicle 1, the first manipulation terminal 210 can display, on the display section 211, various types of information on operation of the work vehicle 1, such as the current position, the current azimuth, and a work status of the work vehicle 1. As an example, the first manipulation terminal 210 displays, on the display section 211, a monitoring screen and the target route on a map that represents the field F1. On the monitoring screen, the current position of the work vehicle 1 and the like are displayed. In this way, the manipulator can easily comprehend a status of the work vehicle 1 visually. Here, the monitoring screen also preferably displays information such as a remaining amount of the chemical solution as the spray material, a remaining amount of fuel, and a state of charge of a battery.

The second manipulation terminal 220 is a dedicated wireless communication terminal that can be carried by the manipulator. The second manipulation terminal 220 is configured to enable the remote manipulation of the work vehicle 1 by outputting (transmitting), to the work vehicle 1, at least the stop instruction (the temporary stop instruction) for stopping the automatic travel of the work vehicle 1 in response to the manipulation by the manipulator. Here, the second manipulation terminal 220 is configured to be communicable with the work vehicle 1 by a different communication system from the first manipulation terminal 210.

More specifically, as long as being in an environment where the connection to (communication with) the work vehicle 1 is enabled, the second manipulation terminal 220 directly and wirelessly communicates with the work vehicle 1 without the communication network N1, and can thereby manipulate the work vehicle 1 at a remote position from the work vehicle 1. However, a range where the second manipulation terminal 220 can be connected to the work vehicle 1 is limited to a short-distance range from the work vehicle 1, such as a range within the field F1 or a range around the field F1, in comparison with that of the first manipulation terminal 210, for example. Thus, as long as being located at a position where the manipulator can visually recognize the work vehicle 1, basically, the manipulator can control the work vehicle 1 by manipulating the second manipulation terminal 220.

As illustrated in FIG. 4 and FIG. 5, the second manipulation terminal 220 includes a first manipulation section 221, a second manipulation section 222, and a third manipulation section 223, each of which individually accepts a manipulation. Each of the first manipulation section 221, the second manipulation section 222, and the third manipulation section 223 includes a physical switch, a touch panel, a mouse, or a keyboard, for example. In the present embodiment, as an example, the first manipulation section 221, the second manipulation section 222, and the third manipulation section 223 are each configured by a momentary push button switch as the physical switch (a mechanical switch). Thus, by individually manipulating each of the first manipulation section 221, the second manipulation section 222, and the third manipulation section 223, the manipulator can output the stop instruction (the temporary stop instruction and an emergency stop instruction) or the like from the second manipulation terminal 220 to the work vehicle 1, for example.

Here, the first manipulation section 221, the second manipulation section 222, and the third manipulation section 223 are each assigned with a different function. Accordingly, depending on which of the first manipulation section 221, the second manipulation section 222, and the third manipulation section 223 is pressed (manipulated) by the manipulator, the second manipulation terminal 220 outputs (transmits) the different instruction to the work vehicle 1. More specifically, "temporary stop" is assigned to the first manipulation section 221, "emergency stop" is assigned to the second manipulation section 222, and "travel start" is assigned to the third manipulation section 223. Thus, for example, when the manipulator manipulates the first manipulation section 221, the second manipulation terminal 220 outputs the temporary stop instruction, which is a type of the stop instruction for stopping the automatic travel of the work vehicle 1.

Just as described, in the present embodiment, the work vehicle 1 can wirelessly communicate with plural types of manipulation terminals that at least include the first manipulation terminal 210 and the second manipulation terminal 220, and is controlled according to the instruction from each of the plural types of the manipulation terminals. In other words, the first manipulation terminal 210 and the second manipulation terminal 220 each constitute a remote manipulation device (a remote controller) capable of remotely manipulating the work vehicle 1. Thus, even at the position away from the work vehicle 1, the manipulator can stop the automatic travel of the work vehicle 1, or the like.

The server 201 is an information processor such as a server device. The server 201 transmits, to the work vehicle 1, information such as the target route, along which the work vehicle 1 is made to travel automatically.

In the present embodiment, for convenience of description, as illustrated in FIG. 1, a vertical direction in a usable state of the work vehicle 1 is defined as an up-down direction D1. In addition, the right-left direction D2 and the front-rear direction D3 are defined with reference to a direction seen from a center point of the work vehicle 1 in a plan view. That is, a travel direction of the work vehicle 1 during forward travel of the work vehicle 1 is a front side in the front-rear direction D3, and the travel direction of the work vehicle 1 during reverse travel of the work vehicle 1 is the rear side in the front-rear direction D3. However, these directions are not intended to limit use directions (directions during use) of the work vehicle 1.

### [2] Details of Work Vehicle

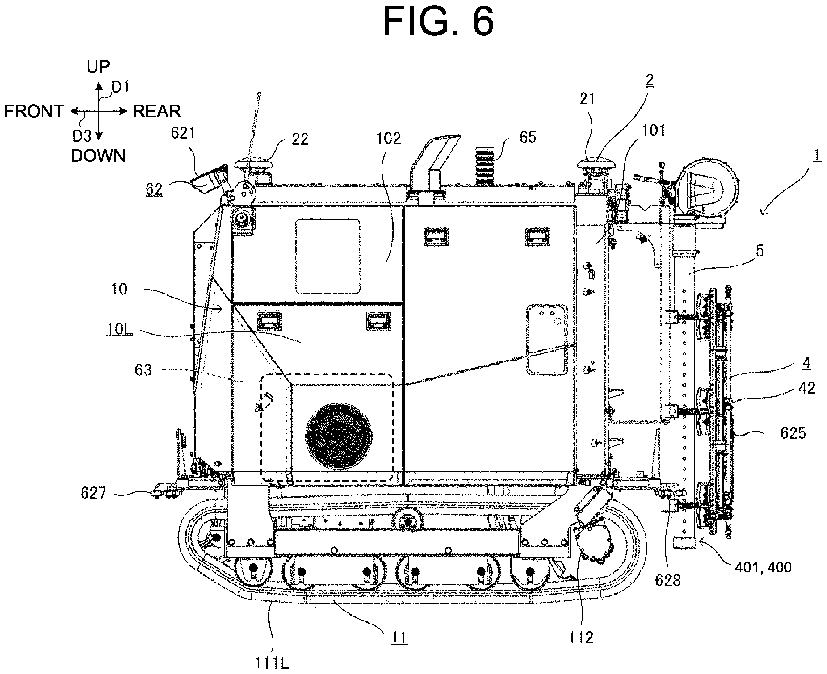

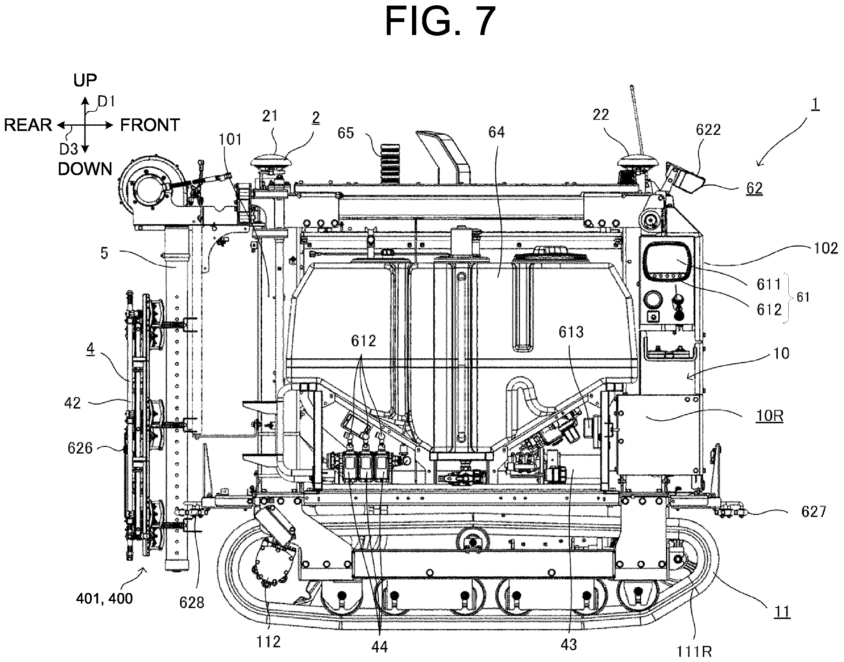

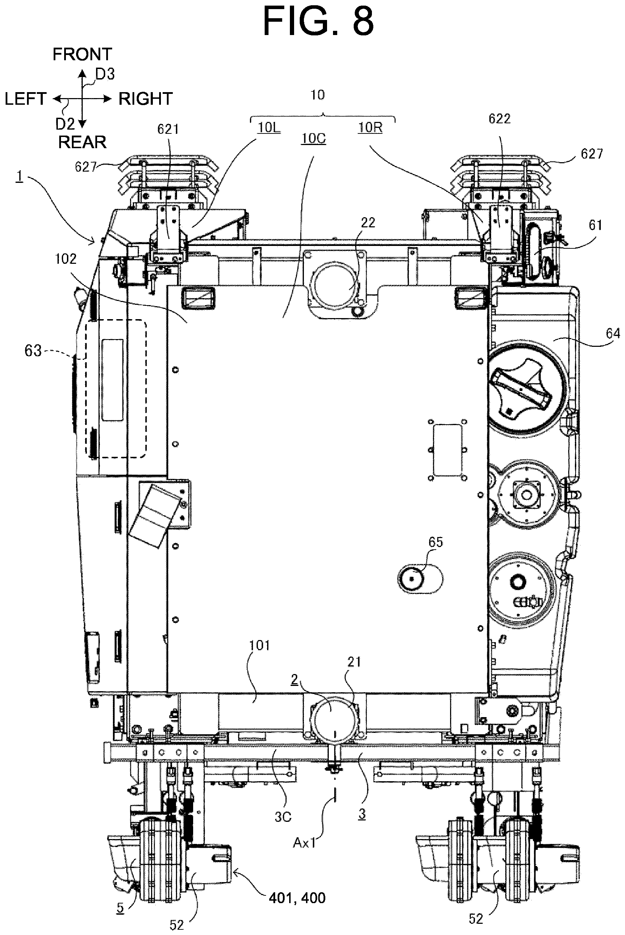

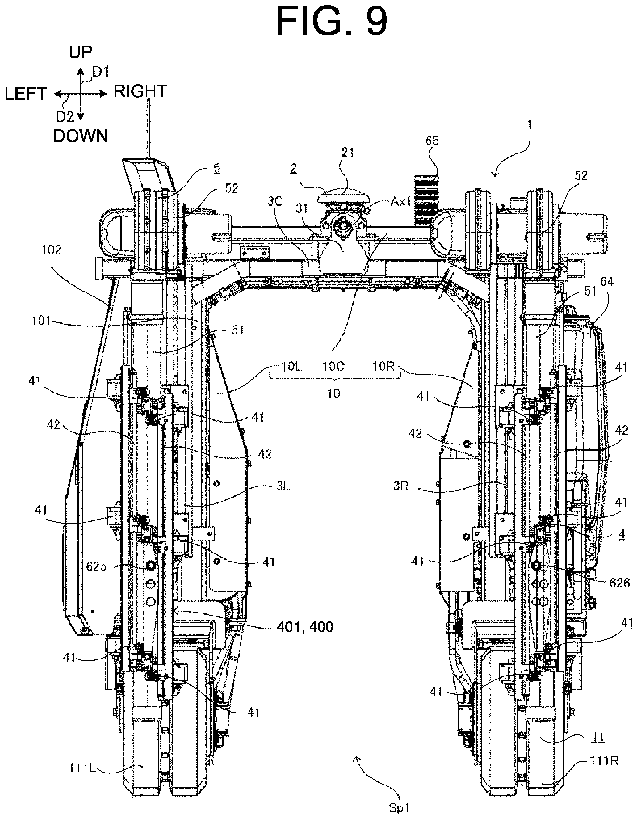

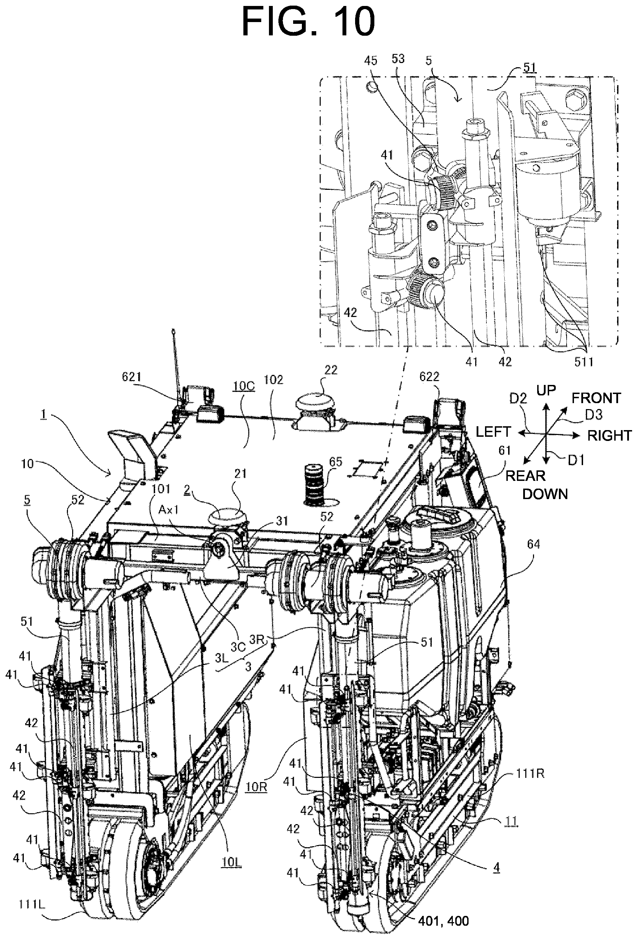

Next, a detailed description will be made on the configuration of the work vehicle 1 with reference to FIG. 1, FIG. 2, and FIG. 5 to FIG. 10. FIG. 1 is an external view of the work vehicle 1 that is seen from a front left side. FIG. 2 is an external view of a back surface of the work vehicle 1 that is from a back surface side (behind). FIG. 5 is a schematic block diagram illustrating a main configuration of the work vehicle 1. FIG. 6 is an external view of a left surface of the work vehicle 1 that is seen from a left side. FIG. 7 is an external view of a right surface of the work vehicle 1 that is seen from a right side. FIG. 8 is an external view of an upper surface of the work vehicle 1 that is seen from above. FIG. 9 is an external view of the back surface of the work vehicle 1 that is seen from the back surface side (behind). FIG. 10 is a schematic view illustrating a state where the work vehicle 1 is seen obliquely from the rear, and has a partially view in a balloon.

The work vehicle 1 includes the machine body 10, the travel section 11, a support frame 3, and the work machine 400. The work machine 400 is detachably attached to the machine body 10, and the work machine 400 can be attached to/detached from the work vehicle 1. In the present embodiment, as described above, at least the sprayer 401 is available as the work machine 400 that can be attached to the machine body 10. Hereinafter, a description will be made on a case where the sprayer 401 is attached as the work machine 400 to the machine body 10 and the work vehicle 1 performs the spraying work.

In the present embodiment, as illustrated in FIG. 5, the work vehicle 1 further includes the positioning device 2, a controller 7, a manual manipulation device 8, a communication device 60, a user interface 61, an obstacle detector 62, a power source 63, a tank 64 (see FIG. 7), a display device 65, a sensor device 66, and the like. The work vehicle 1 further includes a fuel tank, the battery, and the like. In the present embodiment, structures of the work vehicle 1, such as the machine body 10 and the support frame 3, are basically made of metal, and a material therefor is selected according to required strength, weather resistance, and the like. However, the structures of the work vehicle 1 are not limited to those made of the metal, and may be made by appropriately using resin or wood, for example.

### [2.1] Specific Configuration Other Than Work Machine

First, a description will be made on a specific configuration of the work vehicle 1 excluding the work machine 400.

The machine body 10 is a main body of the work vehicle 1 and supports most of the components of the work vehicle 1 such as the positioning device 2 and the support frame 3. The machine body 10 includes a frame 101 (see FIG. 2) and a cover 102. The frame 101 is a member that constitutes a framework of the machine body 10, and supports heavy components such as the power source 63 and the tank 64. The cover 102 is a member that constitutes an external shell of the machine body 10, and is attached to the frame 101 in a manner to cover at least a part of the frame 101 and members mounted on the frame 101. In a part of a rear surface (a back surface) of the machine body 10 and a part of a right surface of the machine body 10, the frame 101 is not covered with the cover 102 and thus is exposed. The cover 102 is divided into plural portions, and these plural portions are configured to be individually detachable from the frame 101. Accordingly, only portions of the cover 102 that correspond to some of the devices (members) such as the power source 63 can be detached, and thus some of the devices (members) such as the power source 63 can be exposed.

As described above, the machine body 10 includes the first block 10L and the second block 10R that are arranged side by side in the right-left direction D2. The first block 10L and the second block 10R oppose each other in a state of being spaced apart from each other with a clearance of a certain value or greater in the right-left direction D2. In the present embodiment, as an example, the first block 10L is located on the left side, and the second block 10R is located on the right side. Thus, a left portion of the machine body 10 is configured by the first block 10L, and a right portion of the machine body 10 is configured by the second block 10R. Furthermore, the machine body 10 has the coupling section 10C that couples the first block 10L and the second block 10R. In a front view (when seen from the front side), the coupling section 10C is long along the right-left direction D2, and each of the first block 10L and the second block 10R is long along the up-down direction D1.

Here, the coupling section 10C couples the upper end portions of the first block 10L and the second block 10R. In other words, the first block 10L and the second block 10R protrude downward from both end portions (in the right-left direction D2) of the coupling section 10C. Thus, with the first block 10L, the second block 10R, and the coupling section 10C, the machine body 10 has the gate-like shape on both of the sides in the front-rear direction D3, which is opened downward. Then, the space Sp1, the three sides of which are surrounded by the first block 10L, the second block 10R, and the coupling section 10C, and which is opened in the front-rear direction D3 is provided inside the machine body 10.

In short, as illustrated in FIG. 2, the machine body 10 provides the space Sp1, through which the crop V1 (the work object) as the target of the work (the spraying work) by the work machine 400 (here, the sprayer 401) passes, between the first block 10L and the second block 10R. More specifically, a dimension of each portion of the machine body 10 is set in a manner to provide the space Sp1 having a height and a width that are greater than a standard size of the crop V1 as the spray object as a reference. Thus, when the crop V1 is in the standard size, the machine body 10 in the state of straddling the crop V1 can allow the crop V1 to pass through the space Sp1 while keeping a clearance of a predetermined value or greater to prevent contact of the machine body 10 with the crop V1. While the crop V1 is passing through the space Sp1, the first block 10L is located on the left side of the crop V1, the second block 10R is located on the right side of the crop V1, and the coupling section 10C is located above the crop V1.

In detail, in the present embodiment, the machine body 10 is configured to be substantially symmetrical in the right-left direction D2. In a side view, the first block 10L and the second block 10R have rectangular shapes in substantially the same size and are in the same shape. Each of the first block 10L and the second block 10R has a shape that is flat in the right-left direction D2, and a dimension thereof in the right-left direction D2 is the smallest of those in the up-down direction D1, the right-left direction D2, and the front-rear direction D3. In addition, the first block 10L and the second block 10R are each formed in a tapered shape in which the dimension in the right-left direction D2 is gradually reduced toward the upper end side from at a portion above a central portion in the up-down direction D1. The coupling section 10C is formed in such a rectangular shape that a dimension in the front-rear direction D3 is larger than that in the right-left direction D2 in the plan view. The coupling section 10C has a flat shape in the up-down direction D1 in which a dimension in the up-down direction D1 is the smallest of those in the up-down direction D1, the right-left direction D2, and the front-rear direction D3.

Just as described, the machine body 10 can be roughly divided into three portions (blocks) including the first block 10L, the second block 10R, and the coupling section 10C. The first block 10L, the second block 10R, and the coupling section 10C each include the frame 101 and the cover 102. In other words, the first block 10L and the second block 10R each include the frame 101 and the cover 102. Furthermore, most of the components of the work vehicle 1, such as the positioning device 2 and the support frame 3, are separately provided in the first block 10L, the second block 10R, and the coupling section 10C.

The travel section 11 is a travel device (a vehicle body) that causes the work vehicle 1 to travel, and is provided in a lower portion of the machine body 10. The machine body 10 can move in the right-left direction D2 and the front-rear direction D3 within the field F1 when traveling (including turning) on the ground by the travel section 11. Since such a travel section 11 is provided in the machine body 10, the work vehicle 1 can perform the work while moving in the field F1.

The travel section 11 includes the paired crawlers (crawler belts) 111L, 111R that are arranged side by side in the right-left direction D2 (see FIG. 1). The paired crawlers 111L, 111R are provided with a predetermined clearance being provided therebetween in the right-left direction D2, and the space Sp1 is provided between these paired crawlers 111L, 111R to allow the crop V1 as the work object to pass therethrough. More specifically, the left crawler 111L located on the left side of the space Sp1 and the right crawler 111R located on the right side of the space Sp1 oppose each other across the space Sp1. When the left crawler 111L and the right crawler 111R are not particularly distinguished from each other, each of the crawlers 111L, 111R is also simply referred to as a "crawler 111". The travel section 11 includes a motor 112 (see FIG. 1) that drives the crawler 111. That is, the travel section 11 is a crawler-type (caterpillar) travel device that causes the work vehicle 1 to travel by driving the endless belt-like crawler 111 with the motor 112.

At least two of the motors 112 are provided in a manner to correspond to the paired crawlers 111L, 111R. The left motor 112 that drives the left crawler 111L and the right motor 112 that drives the right crawler 111R can drive the crawlers 111 separately. In the present embodiment, as an example, the motor 112 is a hydraulic motor (a hydraulic actuator), and drives the crawler 111 when being supplied with hydraulic oil from a hydraulic pump. With such a configuration, even when a road surface condition in the field F1 is rough, the machine body 10 can travel in a relatively stable manner.

Here, the crawler 111 and the motor 112 are provided below each of the first block 10L and the second block 10R. That is, the first block 10L has the left crawler 111L and the motor 112 that drives the crawler 111L, and the second block 10R has the right crawler 111R and the motor 112 that drives the crawler 111R. In the present embodiment, the paired crawlers 111L, 111R and the paired motors 112 are configured to be substantially symmetrical in the right-left direction D2. Since the paired travel sections 11 are arranged away from each other in the right-left direction D2 by the space Sp1, just as described, the work vehicle 1 can travel in a relatively stable posture under any of the various surface conditions in the field F1 including a laterally inclined slope, on which one side of the work vehicle 1 becomes lower than the other side in the right-left direction D2, and the like.

Here, the paired crawlers 111L, 111R are driven by power from the power source 63 in a state where gear ratios thereof can be changed independently by a hydrostatic continuously variable transmission. Accordingly, the machine body 10 is brought into a forward travel state where the machine body 10 travels forward when the paired crawlers 111L, 111R are driven at an equal speed in a forward travel direction. The machine body 10 is brought into a reverse travel state where the machine body 10 travels reversely when the paired crawlers 111L, 111R are driven at an equal speed in a reverse travel direction. In addition, the machine body 10 is brought into a forward turning state where the machine body 10 turns while traveling forward when the paired crawlers 111L, 111R are driven at unequal speeds in the forward travel direction. The machine body 10 is brought into a reverse turning state where the machine body 10 turns while traveling reversely when the paired crawlers 111L, 111R are driven at unequal speeds in the reverse travel direction. Furthermore, the machine body 10 is brought into a pivot turning (pivotal brake turning) state when one of the paired crawlers 111L, 111R is driven in a state where driving of the other thereof is stopped. The machine body 10 is brought into a spin turning (counter-rotation turning) state when the paired crawlers 111L, 111R are driven at an equal speed in the forward travel direction and the reverse travel direction. The machine body 10 stops traveling when driving of the paired crawlers 111L, 111R is stopped.

The power source 63 and the like are mounted on the first block 10L, and the tank 64 and the like are mounted on the second block 10R. By separately arranging the components of the work vehicle 1 in the first block 10L and the second block 10R of the machine body 10, just as described, the work vehicle 1 is balanced in the right-left direction D2, and a center of gravity thereof is set to be low. As a result, the work vehicle 1 can travel stably on the slope of the field F1, and the like.

As described above, the positioning device 2 is a device that detects the current position, the current azimuth, and the like of the machine body 10. The positioning device 2 at least includes the antenna 21. The antenna 21 receives the GNSS signal transmitted from the satellite 203, or the like. That is, the antenna 21 includes a position identification antenna for identifying the position of the machine body 10. Here, the antenna 21 is arranged on the upper surface (a top surface) of the machine body 10 to easily receive the signal (the GNSS signal) from the satellite 203. In other words, the antenna 21 is provided at a position higher than the highest position of the machine body 10. The positioning device 2 further includes a posture detection section that detects the posture of the machine body 10, and the like.

In the present embodiment, in addition to the antenna 21 as a first antenna, the positioning device 2 further includes an antenna 22 as a second antenna. The positioning device 2 receives the GNSS signal or the like by each of these two antennas 21, 22. Here, the antenna 22 (a second antenna) is arranged to be side by side with the antenna 21 (a first antenna) in the front-rear direction D3. In this way, the positioning device 2 can exchange the signal (the GNSS signal or the like) by using each of the antennas 21, 22. In particular, when the antennas 21, 22 are the position identification antennas, the current position of the machine body 10 can be identified in each of the front portion and the rear portion of the machine body 10. Thus, it is also possible to identify the orientation (the current azimuth) of the machine body 10.

The support frame 3 is a member that is attached to one end portion of the machine body 10 in the front-rear direction D3 and that supports the work machine 400 (the sprayer 401 or a weeder 402). In the present embodiment, the support frame 3 is attached to a rear end portion of the machine body 10. Similar to the machine body 10, the support frame 3 has a gate shape. In a back view (when seen from behind), the support frame 3 is arranged at an overlapping position with the machine body 10. More specifically, the support frame 3 includes: a vertical frame 3L (a first vertical frame) and a vertical frame 3R (a second vertical frame) that are arranged side by side in the right-left direction D2; and a horizontal frame 3C that couples upper end portions of the vertical frame 3L and the vertical frame 3R. In this way, the support frame 3 has the gate-like shape surrounding three sides that are the left side, the right side, and the upper side of the space Sp1 with the vertical frame 3L, the vertical frame 3R, and the horizontal frame 3C.

More specifically, the support frame 3 includes the vertical frame 3L and the vertical frame 3R that are arranged side by side in the right-left direction D2. The vertical frame 3L and the vertical frame 3R are opposed to each other in a state of being spaced apart from each other with a clearance of a certain value or greater in the right-left direction D2. In the present embodiment, as an example, the vertical frame 3L is located on the left side, and the vertical frame 3R is located on the right side. Thus, the vertical frame 3L is located behind the first block 10L of the machine body 10, and the vertical frame 3R is located behind the second block 10R of the machine body 10. In the back view (when seen from behind), the horizontal frame 3C is long along the right-left direction D2, and each of the vertical frame 3L and the vertical frame 3R is long along the up-down direction D1.

Here, the horizontal frame 3C couples the upper end portions of the vertical frame 3L and the vertical frame 3R. Thus, in other words, the vertical frame 3L and the vertical frame 3R protrude downward from both end portions (in the right-left direction D2) of the horizontal frame 3C. Just as described, the support frame 3 includes: the horizontal frame 3C that is long along the right-left direction D2; and the paired vertical frames 3L, 3R, each of which is long along the up-down direction D1 and protrudes downward from respective one of the end portions of the horizontal frame 3C. Thus, with the vertical frame 3L, the vertical frame 3R, and the horizontal frame 3C, the support frame 3 has the gate-like shape on both of the sides in the front-rear direction D3, which is opened downward. Then, the space Sp1, the three sides of which are surrounded by the vertical frame 3L, the vertical frame 3R, and the horizontal frame 3C, and which is opened in the front-rear direction D3 is provided inside the support frame 3.

In short, the support frame 3 provides the space Sp1, through which the crop V1 (the work object) as the target of the work passes, between the paired vertical frames 3L, 3R. More specifically, a dimension of each portion of the support frame 3 is set in a manner to provide the space Sp1 having a height and a width that are greater than a standard size of the crop V1 as the work object as a reference. Thus, when the crop V1 is in the standard size, the support frame 3 in the state of straddling the crop V1 can allow the crop V1 to pass through the space Sp1 while keeping a clearance of a predetermined value or greater to prevent contact of the support frame 3 with the crop V1. While the crop V1 is passing through the space Sp1, the vertical frame 3L is located on the left side of the crop V1, the vertical frame 3R is located on the right side of the crop V1, and the horizontal frame 3C is located above the crop V1.

In detail, in the present embodiment, the support frame 3 is configured to be substantially symmetrical in the right-left direction D2. Each of the vertical frame 3L and the vertical frame 3R has a cylindrical shape with a circular cross section. In the present embodiment, as an example, each of the vertical frame 3L and the vertical frame 3R is configured that two cylindrical members are arranged in parallel. The horizontal frame 3C has a square tubular shape with a rectangular cross section. Here, each of the vertical frame 3L and the vertical frame 3R is firmly fixed to the horizontal frame 3C by an appropriate fixing member/method such as a connection fitting, a brace fitting, or welding. Thus, each of the vertical frame 3L and the vertical frame 3R maintains an orthogonal state to the horizontal frame 3C. In other words, in the back view, a corner between the vertical frame 3L and the horizontal frame 3C and a corner between the vertical frame 3R and the horizontal frame 3C each define a right angle.

In the present embodiment, the support frame 3 is supported by the machine body 10 in a manner to be rotatable about a rotation axis Ax1 (see FIG. 8 and FIG. 9) while maintaining a relative positional relationship between the horizontal frame 3C and the pair of the vertical frames 3L, 3R. The rotational axis Ax1 is an axis that passes through a fulcrum section 31 provided to the horizontal frame 3C and extends along the front-rear direction D3. That is, the support frame 3 that supports the work machine 400 is supported by the machine body 10 in the manner to be rotatable about the rotation axis Ax1 along the front-rear direction D3. Here, the "rotation axis" described in the present invention means a virtual axis (a straight line) that serves as a center of rotational motion of a rotating body. In other words, the rotation axis Ax1 is an insubstantial virtual axis. However, the rotation axis Ax1 may be a substantial member such as a shaft pin.

As illustrated in FIG. 5, the communication device 60 has a first communication section 601 and a second communication section 602. The first communication section 601 and the second communication section 602 are communication interfaces, each of which can be operated individually. The first communication section 601 and the second communication section 602 use mutually different communication protocols for data communication with external devices such as the server 201, the first manipulation terminal 210, and the second manipulation terminal 220 according to the predetermined communication protocols. That is, the communication device 60 enables communication in plural communication channels (frequency bands or the like), including the communication by the first communication section 601 and the communication by the second communication section 602.

The user interface 61 is a device that outputs information to a user and/or accepts the user's manipulation. As illustrated in FIG. 7, the user interface 61 has: a display section 611 such as a liquid-crystal display or an organic EL display that displays various types of information; a manipulation section 612 such as a touch panel, a knob, or a push button switch that accepts the manipulation. The manipulator who is an example of the user can make various settings by manipulating the manipulation section 612 according to the manipulation screen that is displayed on the display section 611. More specifically, the manipulator manipulates the manipulation section 612 of the user interface 61 to set an operating condition of the work machine 400, and the like. Examples of the operating condition for the work machine 400 include, but are not limited to, the pressure (a jet pressure) and a flow rate of the spray material at the time of being sprayed from a spray nozzle 41 of the sprayer 401.

The obstacle detector 62 includes a first detection section 621 and a second detection section 622. Each of the first detection section 621 and the second detection section 622 is arranged to face the front of the machine body 10. The first detection section 621 is arranged at a front left end portion of the upper surface of the machine body 10, and the second detection section 622 is arranged at a front right end portion of the upper surface of the machine body 10. That is, the obstacle detector 62 includes the plural detection sections (the first detection section 621 and the second detection section 622) that are mounted on the machine body 10 of the work vehicle 1 and spaced apart from each other in the width direction (the right-left direction D2) orthogonal to the travel direction (the front-rear direction D3) of the work vehicle 1 in the plan view.

Each of the first detection section 621 and the second detection section 622 includes a sensor such as Light Detection and Ranging (LiDAR), and detects a condition around the machine body 10. In the present embodiment, as an example, each of t the first detection section 621 and the second detection section 622 is a three-dimensional sensor. The three-dimensional sensor measures a distance to each distance-measuring point (a measurement object) in a measurement range by employing a Time Of Flight (TOF) method. In the TOF method, the distance to the distance-measuring point is measured on the basis of a round-trip time of light or sound to the distance-measuring point. Examples of the surrounding condition of the machine body 10 include presence or absence of an object (an obstacle or the like) ahead in the travel direction of the machine body 10 and the position (the distance and the azimuth) of the object.

The obstacle detector 62 further includes a first sensor 623 (see FIG. 1), a second sensor 624 (see FIG. 1), a third sensor 625 (see FIG. 6), and a fourth sensor 626 (see FIG. 7). The first sensor 623 and the second sensor 624 are arranged to face the front of the machine body 10, and the third sensor 625 and the fourth sensor 626 are arranged to face the rear of the machine body 10. The first sensor 623 is arranged on a front surface of the first block 10L, and the second sensor 624 is arranged on a front surface of the second block 10R. The third sensor 625 is attached to the vertical frame 3L, and the fourth sensor 626 is attached to the vertical frame 3R.

Each of the first sensor 623 to the fourth sensor 626 includes a sensor such as a sonar sensor, a radar, or LiDAR, and detects the surrounding condition of the machine body 10. In the present embodiment, as an example, each of the first sensor 623 to the fourth sensor 626 is a three-dimensional sensor. The three-dimensional sensor measures a distance to each distance-measuring point (a measurement target) in a measurement range by employing the TOF method. In the TOF method, the distance to the distance-measuring point is measured on the basis of a round-trip time of the light or the sound to the distance-measuring point. Examples of the surrounding condition of the machine body 10 include the presence or the absence of the object (the obstacle or the like) ahead in the travel direction of the machine body 10 and the position (the distance and the azimuth) of the object.

The obstacle detector 62 further includes a front contact sensor 627 and a rear contact sensor 628. A right and left pair of the front contact sensors 627 is arranged on the front side of the machine body 10, and a right and left pair of the rear contact sensors 628 is arranged on the rear side of the machine body 10. Each of the front contact sensor 627 and the rear contact sensor 628 detects the obstacle when contacting the obstacle. Each of the sensors transmits a detection signal to the controller 7 when detecting the obstacle.

The power source 63 is a drive source that supplies the power at least to the travel section 11. The power source 63 has the engine such as a diesel engine. The power source 63 drives the hydraulic pump to supply the hydraulic oil from the hydraulic pump to the motor 112 of the travel section 11, and the like. The power source 63 thereby drives the travel section 11 and the like. Electronic devices such as the positioning device 2, the controller 7, and the communication device 60 are connected to the battery. Thus, these electronic devices can be operated even when the power source 63 is stopped.

The tank 64 stores the spray material such as the chemical solution. The spray material that is stored in the tank 64 is supplied to the sprayer 401 and is then sprayed from the spray nozzle 41 of the sprayer 401. The tank 64 can be replenished with the chemical solution, which is the spray material, from the outside. A volume of the tank 64 is approximately 200 L, for example.

The display device 65 is arranged on the upper surface of the machine body 10. As an example, the display device 65 is formed in a columnar shape that is long in the up-down direction D1. A lighting state of the display device 65 varies according to an operating state (a travel state, a spraying work performing state, or the like) of the work vehicle 1. Thus, the operating state of the work vehicle 1 can be recognized visually from the surroundings of the work vehicle 1.

The sensor device 66 further includes an inertial measurement unit (IMU) that detects the posture of the machine body 10. The IMU has an inertial sensor such as an angular velocity sensor and an acceleration sensor, is mounted on the machine body 10, and thereby detects the posture (an inclination and the like) of the machine body 10.

The sensor device 66 also includes a remaining amount sensor that detects the remaining amount of the chemical solution as the spray material and the remaining amount of the fuel, for example. As an example, the sensor device 66 detects the remaining amount of the chemical solution from an amount of the chemical solution in the tank 64. Similarly, the sensor device 66 detects the remaining amount of the fuel from an amount of fuel in the fuel tank.

The controller 7 is mainly configured to be a computer system that has, for example, one or more processors such as a central processing unit (CPU) and one or more types of memory such as read only memory (ROM) or random access memory (RAM). The controller 7 executes various types of processing (information processing). **In** the present embodiment, the controller 7 is an integrated controller that controls the entire work vehicle 1, and includes, for example, an electronic control unit (ECU). However, the controller 7 may be provided separately from the integrated controller. The controller 7 may include the single processor or the plural processors as the main components.

As illustrated in FIG. 5, the controller 7 includes an acquisition processing section 71, a travel processing section 72, a spray processing section 73, a change processing section 74, a stop processing section 75, a restart processing section 76, and a display processing section 77. In the present embodiment, as an example, the controller 7 is mainly configured to be the computer system that has the one or more processors. Thus, when the one or more processors in the controller 7 execute a control program, these functional sections (the acquisition processing section 71 and the like) are implemented. These functional sections that are included in the controller 7 may separately be provided in plural casings or may be provided in a single casing.

The controller 7 can communicate with the devices that are provided in the various parts of the machine body 10. More specifically, at least the travel section 11, the positioning device 2, the work machine 400 (the sprayer 401 or the weeder 402), the communication device 60, the user interface 61, the obstacle detector 62, the power source 63, the display device 65, and the like are connected to the controller 7. Thus, the controller 7 can control the travel section 11, the work machine 400, and the like and can acquire electric signals from the positioning device 2, the communication device 60, the obstacle detector 62, and the like. The controller 7 may exchange the various types of the information (data) with each of the devices either directly or indirectly via the relay or the like.

More specifically, the controller 7 can communicate with, for example, the first manipulation terminal 210 via the communication device 60. In this way, the controller 7 can display the various types of the information on the display section 211 of t the first manipulation terminal 210, and can accept manipulation information of the manipulation section 212 of the first manipulation terminal 210. That is, the controller has a function as a display control section that displays a display screen on the display section 211 of the first manipulation terminal 210.

The controller 7 further includes, in addition to the above functional sections, an engine control section, a hydro-static transmission (HST) control section that executes control for the hydrostatic continuously variable transmission, and the like. The engine control section executes control for the engine (the power source 63). The HST control section executes the control for the hydrostatic continuously variable transmission.

The acquisition processing section 71 executes acquisition processing to acquire the electric signal (including the data) from each of the devices. In the present embodiment, the acquisition processing section 71 periodically or non-periodically acquires the output of each of the sensors in the obstacle detector 62 and the information (data), such as the posture of the machine body 10, the remaining amount of the chemical solution as the spray material, and the remaining amount of the fuel, from the sensor device 66. The acquisition processing section 71 may acquire various types of the data from the various sensors or the like directly or indirectly via an electronic control unit or the like. The data that is acquired by the acquisition processing section 71 is stored in the memory or the like, for example.

The travel processing section 72 executes automatic travel processing on the basis of the positioning information, which is acquired from the positioning device 2, and the like. In the automatic travel processing, the machine body 10 is made to travel automatically along the target route in the field F1. More specifically, the travel processing section 72 causes the travel section 11 to travel automatically along the target route on the basis of the positioning information that includes the position and the azimuth of the machine body 10 measured by the positioning device 2. For example, when the RTK positioning of the positioning information is ready, the manipulator presses (for example, presses and holds) the third manipulation section 223 of the second manipulation terminal 220. Then, the second manipulation terminal 220 outputs a travel start instruction (a work start instruction) to the work vehicle 1. When acquiring the travel start instruction from the second manipulation terminal 220, the travel processing section 72 starts the automatic travel of the work vehicle 1 on the basis of the positioning information of the machine body 10, which is measured by the positioning device 2. As a result, the work vehicle 1 starts traveling automatically along the target route and starts the work using the work machine 400.

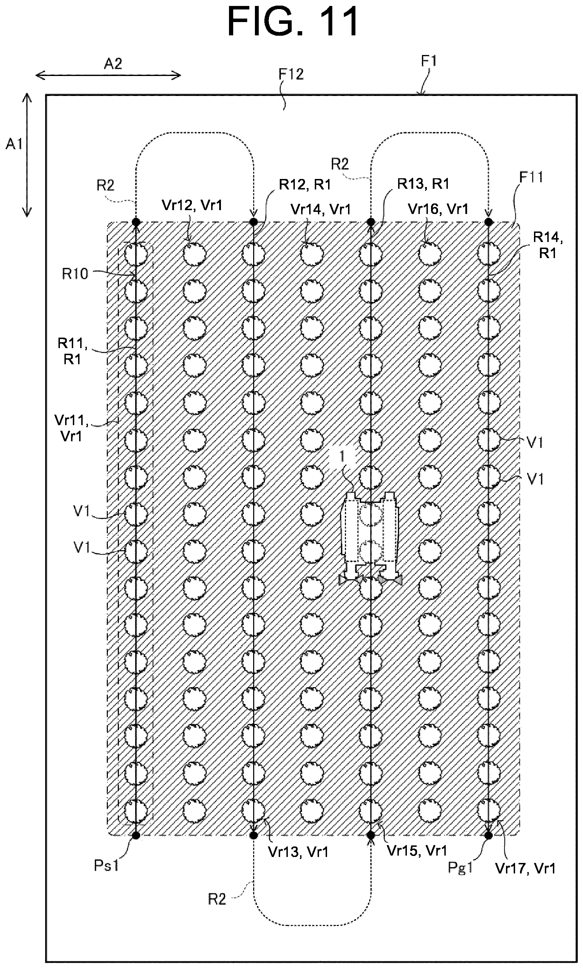

Then, when the work vehicle 1 travels automatically along a target route R10 (see FIG. 11), the work vehicle 1 thereby travels automatically on a travel route. In short, the travel processing section 72 causes the work vehicle 1 to travel automatically on the travel route. The term "travel route" described herein refers to a route on which the work vehicle 1 actually travels when the work vehicle 1 automatically travels in the field F1 (work site). That is, a travel course of the work vehicles 1 during the automatic travel of the work vehicle 1 along the target route R10 is the "travel route". Here, the travel route may be common to (the same as) the target route R10, or may be defined separately from the target route R10. As an example, in the case where the work vehicle 1 is assumed to travel automatically along the target route R10, but the work vehicle 1 passes a position that is offset rightward from the target route R10 by 50 cm, the "travel route" is set at the position that is offset rightward from the target route R10 by 50 cm. In the present embodiment, it is assumed that the travel route is common to (the same as) the target route R10.

In addition, the target route R10 includes plural work routes R1 (see FIG. 11) as linear routes. On each of the work routes R1, the work vehicle 1 performs the work (the spraying work) on the crop V1 as the work object (the spray object). In other words, the travel processing section 72 causes the work vehicle 1 to travel automatically along each of the work routes R1.

Furthermore, the travel processing section 72 controls the travel section 11 according to a manipulation signal from the manual manipulation device 8. More specifically, the controller 7 controls the travel section 11 by the travel processing section 72, and thereby enables the control of the travel section 11 according to the manipulation of the manual manipulation device 8 by the manipulator, that is, manual driving of the travel section 11.

The spray processing section 73 executes spray control processing for the work (the spraying work) of the sprayer 401. More specifically, when the work vehicle 1 starts the automatic travel at a work start position, the spray processing section 73 outputs, to the sprayer 401, a switching signal for switching a spray pattern on the basis of control information that is included in the predetermined target route. When receiving the switching signal, the sprayer 401 performs the spraying work in a predetermined spray pattern.

The change processing section 74 executes change processing to change an acceleration upper limit value according to a slip condition. The acceleration upper limit value is an upper limit value of acceleration until a vehicle speed of the work vehicle 1 reaches a target speed. The "acceleration" described in the present invention means a change rate (inclination) of the vehicle speed with respect to a time required until the current speed reaches the target speed in the case where the target speed, which differs from the current speed as the current vehicle speed (moving speed) of the work vehicle 1, is set. That is, as the acceleration is increased, the time required until the current speed reaches the target speed is reduced, but a gear shift shock is increased. Meanwhile, as the acceleration is reduced, the time required until the current speed reaches the target speed is increased, but the gear shift shock is reduced.

Furthermore, the acceleration during an acceleration time of the work vehicle 1 is set as positive (plus) acceleration, and the acceleration during a deceleration time of the work vehicle 1 is set as negative (minus) acceleration. Accordingly, when the positive acceleration is generated on the work vehicle 1, which is traveling at a certain vehicle speed, the work vehicle 1 is accelerated, and the vehicle speed is changed to a high speed side. Meanwhile, when the negative acceleration is generated, the work vehicle 1 is decelerated, and in speed and the vehicle speed is changed to a low speed side. The negative acceleration is synonymous with "deceleration".

The "acceleration upper limit value", which is the upper limit value of the acceleration, is not fixed to a constant value, but can be changed by the change processing section 74. Here, the change processing section 74 changes the acceleration upper limit value according to the slip condition. The "slip condition" is a condition on a slip that occurs during the travel of the work vehicle 1. The slip condition will be described in detail below.

The stop processing section 75 executes stop processing to stop the automatic travel when the work vehicle 1 deviates from the travel route during the automatic travel of the work vehicle 1. That is, in the case where the work vehicle 1 deviates from the travel route while the work vehicle 1 is traveling automatically on the travel route along the target route, the stop processing section 75 stops the automatic travel of the work vehicle 1. In the present embodiment, the stop processing section 75 stops the work vehicle 1 on the spot by stopping the automatic travel.

When a restart condition is satisfied while the automatic travel is stopped, the restart processing section 76 executes restart processing to return the work vehicle 1 onto the travel route and restart the automatic travel. There is a case where the work vehicle 1 deviates from the travel route, and the stop processing section 75 stops the automatic travel of the work vehicle 1. That is, in such a case, when the restart condition is satisfied during the stop (of the automatic travel) of the work vehicle 1, the restart processing section 76 restarts the automatic travel of the work vehicle 1. Furthermore, while the automatic travel is stopped, the work vehicle 1 is in a state of being deviated from the travel route. Thus, the restart processing section 76 first causes the work vehicle 1 to return onto the travel route, and then causes the work vehicle 1 to restart the automatic travel.

The "restart condition" is a condition for restarting the automatic travel of the work vehicle 1. That is, a stop state of the automatic travel of the work vehicle 1 continues unless the restart condition is satisfied. Then, when the restart condition is satisfied, the restart processing section 76 causes the work vehicle 1 to restart the automatic travel. The restart condition will be described in detail below.

For example, the display processing section 77 displays the various types of the information on the display section 211 of the first manipulation terminal 210, the display section 611 of the user interface 61, or the like. The display processing section 77 causes the display section 211 (or the display section 611) to display the manipulation screen for generating the target route R10, the generated target route R10, information on the automatic travel (a travel status, the work status, and the like of the work vehicle 1), and the like.

The manual manipulation device 8 is a device for manually controlling the work vehicle 1. In the work vehicle 1, the controller 7 (the acquisition processing section 71) acquires the manipulation signal that is output from the manual manipulation device 8 in response to the manipulation by the manipulator.

In the present embodiment, the manual manipulation device 8 is connected to the controller 7 of the work vehicle 1 by a cable having a sufficient length, and makes the wired communication with the controller 7. Accordingly, the manipulator can manually manipulate the work vehicle 1 by using the manual manipulation device 8 without getting on the machine body 10 of the work vehicle 1, for example, in a state of standing around the machine body 10. Here, the manual manipulation device 8 may communicate with the work vehicle 1 (the controller 7) by the wireless communication using the radio waves or the light, and even in such a case, the manipulator can manually manipulate the work vehicle 1 with the manual manipulation device 8 from the outside of the machine body 10. In short, the manual manipulation device 8 can be manipulated outside the machine body 10. Thus, for example, when the work vehicle 1 is unloaded from a transport vehicle, or the like, the manipulator can manually manipulate the work vehicle 1 at a safe place outside the machine body 10.

### [2.2] Specific Configuration of Sprayer

Next, a description will be made on a specific configuration of the sprayer 401 that is attached as the work machine 400 to the machine body 10.

The sprayer 401 performs the spraying work to spray the chemical solution as the spray material onto the crop V1 as the spray object. As illustrated in FIG. 10 and the like, the sprayer 401 has a nozzle unit 4 and an airflow generation unit 5. The nozzle unit 4 has the spray nozzle 41 and the like, and discharges the chemical solution as the spray material that is stored in the tank 64. The airflow generation unit 5 generates an airflow for conveying the spray material (the chemical solution) that is discharged from the nozzle unit 4.

The nozzle unit 4 and the airflow generation unit 5 are supported by the support frame 3. Since the support frame 3 is supported by the machine body 10, the sprayer 401, which includes the nozzle unit 4 and the airflow generation unit 5, is indirectly supported by the machine body 10. In the present embodiment, since the support frame 3 is disposed in the rear end portion of the machine body 10, the nozzle unit 4 and the airflow generation unit 5, which are supported by the support frame 3, are also arranged in the rear end portion of the machine body 10.

The spray nozzle 41 of the nozzle unit 4 is a portion that is supported by the support frame 3 to discharge (spray) the spray material. In the present embodiment, as an example, the spray nozzle 41 is a discharge port (a spray section) that actually serves as an outlet of the spray material (the chemical solution). The sprayer 401 has the plural (12 as an example in the present embodiment) spray nozzles 41.

The nozzle unit 4 includes, in addition to the spray nozzle 41, a spray pipe 42, a pump 43 (see FIG. 7), a valve 44 (see FIG. 7), spray piping, and the like. In the present embodiment, the spray nozzle 41 is attached to the spray pipe 42. The spray piping connects the spray pipe 42 to the pump 43 via the valve 44. The pump 43 pressure-feeds the spray material (the chemical solution) stored in the tank 64 to the spray pipe 42. The valve 44 is an electronically-controlled valve unit such as an electromagnetic valve and changes a pressure (a spraying pressure), the spray pattern, and the like at the time of spraying the spray material. As a result, the chemical solution in the tank 64 is supplied to the spray nozzle 41 via the valve 44 and the spray pipe 42 by the pump 43, and is discharged from the spray nozzle 41. Here, the atomized chemical solution is discharged (sprayed) from the spray nozzle 41.

In detail, as illustrated in FIG. 9 and FIG. 10, the spray pipe 42 is piping that is long in the up-down direction D1, and the two spray pipes 42 are attached to each of the vertical frame 3L and the vertical frame 3R of the support frame 3. That is, in the present embodiment, the nozzle unit 4 has a total of the four spray pipes 42. The two (paired) spray pipes 42 that are attached to each of the vertical frame 3L and the vertical frame 3R are arranged side by side in the right-left direction D2. The chemical solution as the spray material that is poured into each of the spray pipes 42 from an upper end portion thereof flows downward through the respective spray pipe 42 and is discharged from the three spray nozzles 41. The three spray nozzles 41 are attached to each of the spray pipes 42. Thus, the nozzle unit 4 has a total of the 12 spray nozzles 41.

Each of the spray nozzles 41 is attached to the corresponding spray pipe 42 such that a position of the respective spray nozzle 41 can be changed in the up-down direction D1. Thus, it is possible to change a distance between the adjacent spray nozzles 41 and a height position of each of the spray nozzles 41 with respect to the spray pipe 42 according to the spray object (the crop V1). In addition, each of the spray nozzles 41 is attached such that the position thereof in the up-down direction D1 with respect to the machine body 10, the position thereof in the right-left direction D2 with respect to the machine body 10, and an orientation (an angle) thereof can be changed according to the spray target. However, in the sprayer 401, the number of the spray nozzles 41 that are provided to each of the spray pipes 42, and the like can appropriately be changed according to the type of the spray object (the crop V1), a length of each of the spray pipes 42, and the like.

The airflow generation unit 5 generates the airflow that conveys the spray material (the chemical solution) discharged from the spray nozzle 41. The airflow generation unit 5 is supported by the support frame 3 together with the spray nozzles 41. That is, the sprayer 401 according to the present embodiment is an air-assisted sprayer that sprays the spray material (the chemical solution) by using the airflow generated by the airflow generation unit 5. As a result, the work vehicle 1 can efficiently spray the spray material (the chemical solution) even on the spray object (the crop V1) at a position relatively away from the spray nozzle 41.

The airflow generation unit 5 includes a duct 51 and a blower 52. The duct 51 forms a flow path through which air flows along the up-down direction D1. The blower 52 causes the air to flow through the duct 51. In the airflow generation unit 5, the air that is blown out of a blowout hole 511 (see FIG. 10) formed in the duct 51 produces the airflow. In short, in the airflow generation unit 5, the air is flowed toward the duct 51 by the blower 52, is flowed through the flow path in the duct 51, and is then blown out of the blowout hole 511. In this way, a flow of the air (the airflow) that flows outward from the blowout hole 511 is generated. With such a configuration, it is possible to generate the stable airflow over a relatively wide range. Furthermore, the airflow generation unit 5 can adjust a flow rate of the airflow by controlling the blower 52. The airflow generation unit 5 can adjust a conveyance distance of the spray material by adjusting the flow rate, and can convey the spray material farther as the flow rate is increased. Thus, in the work vehicle 1 according to the present embodiment, it is possible to adjust a spraying range of the spray material by the sprayer 401.

In detail, the duct 51 is a pipe that is long in the up-down direction D1, and one each of the ducts 51 is attached to the vertical frame 3L and the vertical frame 3R of the support frame 3. That is, in the present embodiment, the airflow generation unit 5 has a total of the two ducts 51. Each of the ducts 51 is formed with the plural blowout holes 511 on a left surface of the respective duct 51 in alignment along the up-down direction D1. Furthermore, the two spray pipes 42 of the nozzle unit 4 are fixed to a rear portion of each of the ducts 51.

Here, two sets of the duct 51, the two spray pipes 42 attached to the respective duct 51, and a total of the six spray nozzles 41 attached to these two spray pipes 42 are provided, and these sets are arranged symmetrically in the right-left direction D2. The three spray nozzles 41 that are provided to the left spray pipe 42 of the two spray pipes 42 each discharge the spray material (the chemical solution) toward the front left side, and the three spray nozzles 41 that are provided to the right spray pipe 42 each discharge the spray material (the chemical solution) toward the front right side. Thus, the misty spray material that is discharged from each of the left spray nozzles 41 is conveyed leftward by the airflow that is blown leftward from the duct 51, and the misty spray material that is discharged from each of the right spray nozzles 41 is conveyed rightward by the airflow that is blown rightward from the duct 51.

As a result, of the plural (12) spray nozzles 41, the three spray nozzles 41 provided to the leftmost spray pipe 42 each spray the chemical solution leftward toward the crop V1 that is located on the outer left side of the machine body 10. Of the plurality of the spray nozzles 41, the three spray nozzles 41 provided to the spray pipe 42 that is adjacent to the leftmost spray pipe 42 and is located on the inner left side each spray the chemical solution rightward toward the crop V1 that is located in the space Sp1 on the inner side of the machine body 10. Of the plurality of the spray nozzles 41, the three spray nozzles 41 provided to the rightmost spray pipe 42 each spray the chemical solution rightward toward the crop V1 that is located on the outer right side of the machine body 10. Of the plurality of the spray nozzles 41, the three spray nozzles 41 provided to the spray pipe 42 that is adjacent to the rightmost spray pipe 42 and is located on the inner right side each spray the chemical solution leftward toward the crop V1 that is located in the space Sp1 on the inner side of the machine body 10.

With the above configuration, in the sprayer 401, a set of the two spray pipes 42 and the six spray nozzles 41 that is provided to the vertical frame 3L of the support frame 3 functions as a left spray unit. Meanwhile, a set of the two spray pipes 42 and the six spray nozzles 41 that is provided to the vertical frame 3R of the support frame 3 functions as a right spray unit. A right and left pair of the spray units is arranged behind the machine body 10 in a manner to enable spraying in the right-left direction D2. The right and left pair of the spray units is also arranged with a clearance (the space Sp1), which allows the crop V1 to pass therethrough, being interposed therebetween.

In the sprayer 401, the plural (12) spray nozzles 41 are divided into plural systems, and each of the plural systems can be controlled independently. In the present embodiment, as an example, the six spray nozzles 41 that are provided to the two inner spray pipes 42 in the right-left direction D2 of the four spray pipes 42 are classified into a first system. The three spray nozzles 41 that are provided to the leftmost spray pipe 42 are classified into a second system. The three spray nozzles 41 that are provided to the rightmost spray pipe 42 are classified as a third system. Thus, the spray patterns available for the sprayer 401 include a full spray pattern in which all the spray nozzles 41 spray the spray material (the chemical solution) and a limited spray pattern in which a spray direction is limited. The limited spray patterns include: a first spray pattern in which only the six spray nozzles 41 in the first system sprays the spray material (the chemical solution); a second spray pattern in which only the three spray nozzles 41 in the second system sprays the spray material (the chemical solution); and a third spray pattern in which only the three spray nozzles 41 in the third system sprays the spray material (the chemical solution). The limited spray patterns further include: a fourth spray pattern in which only the nine spray nozzles 41 in the first and second systems spray the spray material (the chemical solution); a fifth spray pattern in which only the nine spray nozzles 41 in the first and third systems spray the spray material (the chemical solution); and the sixth spray pattern in which only the six spray nozzles 41 in the second system and the third system spray the spray material (the chemical solution).

The sprayer 401 is controlled by the controller 7, and the spray pattern of the sprayer 401 is thereby appropriately switched among the above-described spray patterns (a total of seven patterns including the full pattern and the six limited spray patterns). In the nozzle unit 4, the valve 44 is at least provided for each system of the spray nozzles 41. In the present embodiment, the three valves 44 are provided so as to correspond to the three systems (the first system, the second system, and the third system). Each of these plural (three) valves 44 is controlled individually by the controller 7 to change the spray pattern. In addition, the spraying range of the spray material by the sprayer 401 can be changed by changing, for each of the systems, the pressure (the spraying pressure) at which the spray material is sprayed. Furthermore, in the present embodiment, the spraying range of the spray material can also be changed by adjustment of the flow rate produced by the airflow generation unit 5. This configuration can provide an even more variety of the spraying ranges than the related art according to the spray object (the crop V1) or the spray material (the chemical solution).

In the present embodiment, as described above, the support frame 3 is not fixed relative to the machine body 10 but is rotatable about the rotation axis Ax1. With the rotation of the support frame 3, the sprayer 401, which is supported by the support frame 3, also rotates about the rotation axis Ax1.

The work vehicle 1 according to the present embodiment does not include an actuator or the like that actively rotates the support frame 3. Thus, the support frame 3 rotates only after an external force is applied to the support frame 3. For example, when the machine body 10 travels on the laterally inclined slope, the support frame 3 rotates by own weight, that is, gravity acting on the support frame 3. Here, in the case where the support frame 3 and members (the sprayer 401 and the like) supported by the support frame 3 have symmetrical weight balance in the right-left direction D2, the support frame 3 is maintained at a neutral position as long as the machine body 10 is maintained horizontally.

When the rotatable support frame 3 as described so far rotates, for example, during travel of the machine body 10 on the laterally inclined slope, the spray material (the chemical solution) is unlikely to be sprayed in an uneven amount (sprayed unevenly) by the sprayer 401 due to rotation of the support frame 3. In short, in the case where the support frame 3 is fixedly supported by the machine body 10, the machine body 10 is possibly inclined during the travel on the laterally inclined slope. In this case, a distance between an upper portion of the crop V1 (the spray object), which extends straight in the vertical direction from the ground (the field F1), and the spray nozzle 41 differs from a distance between a lower portion of the crop V1 and the spray nozzle 41. This may lead to the uneven spray amount of the spray material. To solve such a problem, in the work vehicle 1 according to the present embodiment, the support frame 3 rotates. Thus, the support frame 3, the spray nozzles 41 supported by the support frame 3, and the like can each keep the same posture as the posture during travel on a horizontal surface. Accordingly, the distance between the upper portion of the crop V1 (the spray object), which extends straight in the vertical direction from the ground (the field F1), and the spray nozzle 41 is less likely to vary from the distance between the lower portion of the crop V1 (the spray target) and the spray nozzle 41. Thus, the unevenness of the spray amount of the spray material is easily eliminated or minimized.

### [3] Travel Control Method for Work Vehicle

Hereinafter, a description will be made on a travel control method for the work vehicle 1 (hereinafter simply referred to as a "travel control method") that is executed mainly by the controller 7 with reference to FIG. 11 to FIG. 25.

The travel control method according to the present embodiment is executed by the controller 7 that has the computer system as the main component. Thus, in other words, the travel control method is embodied by a work vehicle control program (hereinafter simply referred to as a "control program"). That is, a travel control program according to the present embodiment is a computer program that causes the one or more processors to execute each processing for the travel control method. Such a control program may cooperatively be executed by the controller 7, the first manipulation terminal 210, and the like, for example.

As illustrated in FIG. 5, the controller 7 that executes the travel control method constitutes a travel control system 100. The travel control system 100 is a system that executes control related to the travel of the work vehicle 1. In other words, the travel control system 100 according to the present embodiment is used for the control of the work vehicle 1 that performs the work while moving in the field F1 (the work site) where the plural crop rows Vr1 (the work target rows), each of which includes the plural crops V1 (the work objects), are arranged.

As described above, the travel control system 100 according to the present embodiment includes the controller 7 that has the acquisition processing section 71, the travel processing section 72, the spray processing section 73, the change processing section 74, the stop processing section 75, the restart processing section 76, the display processing section 77, and the like. The controller 7 is mounted on the machine body 10 of the work vehicle 1 and is one of the components of the work vehicle 1. Accordingly, the travel control system 100 constitutes the work vehicle 1 together with the machine body 10 that includes the travel section 11. In other words, the work vehicle 1 according to the present embodiment includes the travel control system 100 and the travel section 11. The travel section 11 is controlled by the travel control system 100.

### [3.1] Basic Operation

First, a description will be made on basic operation at the time when the travel processing section 72 executes the automatic travel processing and t the work vehicle 1 thereby travels automatically in the field F1 as the work site. Here, such a case is assumed where the sprayer 401 as the work machine 400 is attached to the machine body 10 of the work vehicle 1, and the work vehicle 1 performs the spraying work.

The travel processing section 72 starts the automatic travel of the work vehicle 1 when predetermined automatic travel conditions are satisfied and the acquisition processing section 71 acquires an automatic travel start instruction. The automatic travel conditions include, for example, that the target route R10 is set, that a key switch (an engine key switch) for starting the engine (the power source 63) of the work vehicle is ON, and that the work vehicle 1 is located at a work start position Ps1 (see FIG. 11). That is, in a state where the target route R10 is set and the engine is running, when the work vehicle 1 moves to the work start position Ps1 in the target route R10 by the manual manipulation using the manual manipulation device 8, the automatic travel conditions are satisfied. In this state, for example, the manipulator manipulates the third manipulation section 223 of the second manipulation terminal 220, and the second manipulation terminal 220 then outputs the automatic travel start instruction to the work vehicle 1. Consequently, the travel processing section 72 starts the automatic travel of the work vehicle 1.

As illustrated in FIG. 11, as an example, the field F1 where the seven crop rows Vr11 to Vr17 exist is assumed as the work site. This field F1 includes: a work area F11 (a hatched area in FIG. 11) where the crop rows Vr11 to Vr17 are formed; and a non-work area F12 that is a headland area formed around the work area F11 in a manner to surround the work area F11. The work area F11 is an area where the work vehicle 1 performs the work (the spraying work herein) in the field F1. The non-work area F12 is an area where the work vehicle 1 does not perform the work (the spraying work herein). That is, the work site (the field F1) includes: the work area F11 where the work is performed by the work vehicle 1; and the non-work area F12 where the work is not performed by the work vehicle 1.

In such a field F1, the work vehicle 1 can travel automatically (travel autonomously) along the preset target route R10. For example, the work vehicle 1 travels automatically along the target route R10 from the work start position Ps1 to a work end position Pg1. The target route R10 includes the plural work routes R1 and plural travel routes R2. Each of the plural work routes R1 is a straight route on which the work vehicle 1 performs the work (the spraying work) on the crop V1 as the work object (the spray object). Each of the plural travel routes R2 is a route (a non-work route) on which the work vehicle 1 moves between the crop rows Vr1 without performing the spraying work. The plural travel routes R2 can include a turning route and a straight route.

In the example of FIG. 11, the target route R10 includes four work routes R11 to R14 in the work area F11. Each of the work routes R11 to R14 is formed along the length direction A1 that is a longitudinal direction of the crop row Vr1 (that is, a direction in which the plural crops V1 are aligned). As an example, the work route R11 is set on the crop row Vr11, the work route R12 is set on the crop row Vr13, the work route R13 is set on the crop row Vr15, and the work route R14 is set on the crop row Vr17. In the non-work area F12 that is located on each side of the work area F11 in the length direction A1, the travel route R2 is formed to connect two each of the work routes R11 to R14 that are adjacent to each other in the width direction A2. That is, basically, of the target route R10, the work route R1 is formed in the work area F11 of the work site (the field F1), and the travel route R2 is formed in the non-work area F12.

On the target route R10 described above, the work vehicle 1 travels in the work area F11 from the work start position Ps1 toward one side (an upper side in FIG. 11) in the length direction A1 along the work route R11, and thereafter travels in the non-work area F12 toward a start end of the next work route R12 along the travel route R2. Then, the work vehicle 1 travels in the work area F11 toward the other side (a lower side in FIG. 11) in the length direction A1 along the work route R12, and thereafter travels in the non-work area F12 toward a start end of the next work route R13 along the travel route R2. Next, the work vehicle 1 travels in the work area F11 toward the one side in the length direction A1 along the work route R13, and thereafter travels in the non-work area F12 toward a start end of the next work route R14 along the travel route R2. Finally, the work vehicle 1 travels in the work area F11 toward the other side in the length direction A1 along the work route R14 and travels to the work end position Pg1.

Here, it is assumed that the current position of the work vehicle 1 is identified by using the position of the antenna 21 that is arranged at the center in the right-left direction D2 of the rear portion of the machine body 10 in the plan view. Accordingly, when the work vehicle 1 travels automatically along the target route R10, the center in the right-left direction D2 of the rear portion of the machine body 10 passes on the target route R10. Thus, the travel route on which the work vehicle 1 actually travels automatically matches the target route R10. Furthermore, as described above, while traveling in the posture that the gate-shaped machine body 10 straddles the single crop row Vr1, the work vehicle 1 sprays, from the sprayer 401, the spray material (the chemical solution) on the crops V1 in this crop row Vr1 and the crops V1 in the adjacent crop rows Vr1 to this crop row Vr1. The current position of the work vehicle 1 may be identified from the position of the antenna 22, which is arranged in the front portion of the machine body 10, or may be identified from the positions of both of the antennas 21, 22.

Thus, for example, as illustrated in FIG. 11, the machine body 10 travels by straddling the crop row Vr15 while the work vehicle 1 travels on the work route R13 set on the crop row Vr15. At this time, the first block 10L travels on the work path between the crop row Vr14 and the crop row Vr15, and the second block 10R travels on the work path between the crop row Vr15 and the crop row Vr16. Furthermore, at this time, the work vehicle 1 can simultaneously spray the spray material (the chemical solution) on the crops V1 in the crop row Vr15, the crops V1 in the crop row Vr14 on the left side, and the crops V1 in the crop row Vr16 on the right side.

In addition, the work vehicle 1 travels autonomously in a predetermined row order. In the example of FIG. 11, the work route R1 is set in every other row in an arrangement order of the crop rows Vr1 including the crop rows Vr11, Vr13, Vr15, Vr17. Thus, the work vehicle 1 travels automatically in every other row of the plural crop rows Vr1. While traveling in every other row of the plural crop rows Vr1, the work vehicle 1 simultaneously sprays the spray material (the chemical solution) on the spray objects (the crops V1) in the three rows that are adjacent the width direction A2. In this way, the work vehicle 1 can perform the spraying work on all of the spray objects. However, such a setting of the work route R1 is merely an example. The work vehicle 1 may travel in every other row in the arrangement order of the crop rows Vr1, or may travel in every several rows.

Here, the work vehicle 1 performs the spraying work while traveling on the work route R1, and does not perform the spraying work while traveling on the travel route R2. Thus, the work vehicle 1 starts the spraying work when starting the travel on the work route R1. Then, the work vehicle 1 stops the spraying work when traveling to the terminal end of the work route R1. Then, the work vehicle 1 travels on the travel route R2 in a state where the spreading work is stopped, and restarts the spraying work when reaching a start end of the next work route R1. In this way, the work vehicle 1 performs the spraying work during the travel in the work area F11, and does not perform the spraying work during the travel in the non-work area F12.

In the example of FIG. 11, the travel route R2 includes the turning routes for a right gentle turn and a left gentle turn. However, a turning mode for changing the azimuth of the work vehicle 1 is not limited to the "gentle turn" and may include, for example, the "pivotal brake turn", the "counter-rotation turn", or the like. Furthermore, the turning mode of the work vehicle 1 may include the following turning mode. In the turning mode, in order to enable turning of the machine body 10 in a limited space, such as a so-called "fish tail turn", the machine body 10 makes a turn while being switched between the forward travel and the reverse travel.

The target route R10 is generated on the basis of information such as work vehicle information on the work vehicle 1, field information on the field F1, and work information on the work (the spraying work herein). Examples of the work vehicle information include information on a model of the work vehicle 1, information on the position of the antenna 21 in the work vehicle 1, information on a type of the work machine 400 (the sprayer 401 herein), information on the size and the shape of the work machine 400, information on the position of the work machine 400 with respect to the machine body 10, and information on the vehicle speed and an engine speed during the work by the machine body 10. The field information includes information on the position and the shape of the field F1, information on the work start position Ps1, information on the work end position Pg1, information on the work direction, and the like. The work direction described herein means a direction in which the work vehicle 1 travels while performing the spraying work in the work area F11, which is the area in the field F1 excluding the non-work area F12 such as the headland. The work information includes information on the number of skips, information on a width of the non-work area F12, and the like. The number of skips is the number of the work routes R1 that are skipped when the work vehicle 1 turns in the non-work area F12.

The work vehicle information, the field information, the work information, and the like may be set manually by the manipulator when the manipulator performs a manipulation to register these pieces of the information on the first manipulation terminal 210, for example. Alternatively, the information on the position and the shape of the field F1, and the like may be acquired automatically in the case where the manipulator manually manipulates the work vehicle 1 to make the work vehicle 1 travel around the field F1 along an outer periphery once, and transition of the position information of the antenna 21 at the time is recorded, for example.

The generated target route R10 is stored in the memory (the storage section) of the controller in the work vehicle 1, and is used for the automatic travel by the travel processing section 72. In addition, the target route R10 can be displayed on the display section 211 of the first manipulation terminal 210, or the like.

### [3.2] Non-Turning Reciprocating Travel

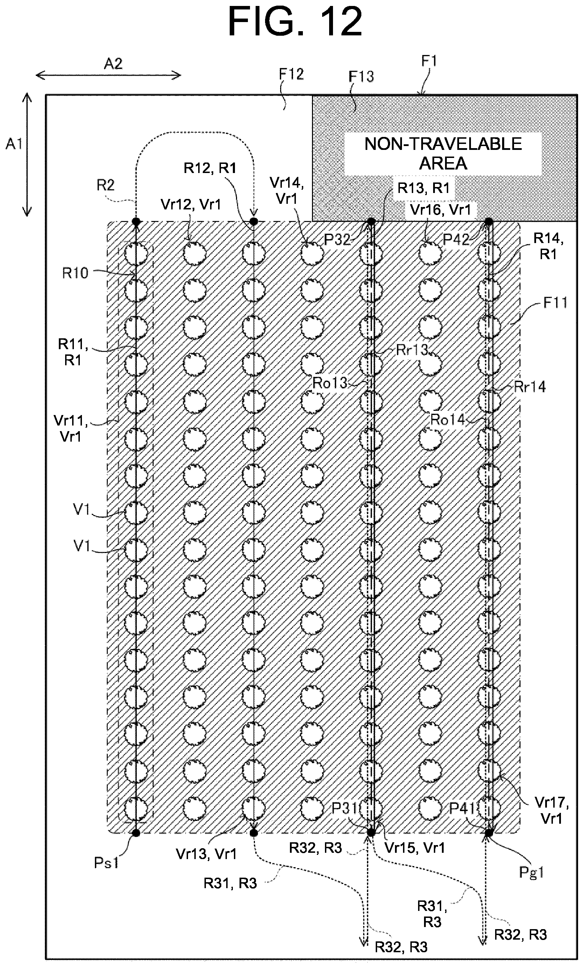

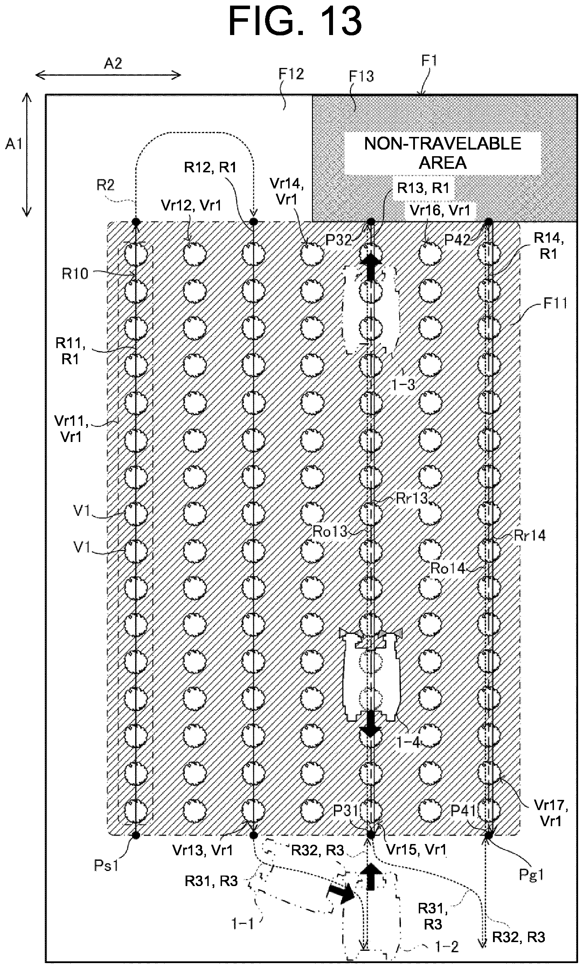

Next, a description will be made on non-turning reciprocating travel that is one of the travel modes of the work vehicle 1 during the automatic travel by the travel processing section 72 with reference to FIG. 12 and FIG. 13.

First, basically as described above, the travel route R2 for the turning travel of the work vehicle 1 is formed in the non-work area F12 as the headland area around the work area F11, and the work vehicle 1 moves between the crop rows Vr1 by traveling on the travel route R2. Also, in the examples illustrated in FIG. 12 and FIG. 13, the work vehicle 1 travels on the travel route R2 that is formed in the non-work area F12 as the headland area on the one side (an upper side in FIG. 12) of the work area F11 in the length direction A1, and thereby moves from the work route R11 to the next work route R12.

However, there is a possibility that the travel route R2 cannot be generated in the case where it is difficult to cause the work vehicle 1 to turn in the vicinity (the headland) of the work area F11 where the work route R1 is formed, depending on the field F1 (the work site), for example, due to the narrow headland or absence of the headland. In the examples illustrated in FIG. 12 and FIG. 13, the following situation is assumed. The headland area (the non-work area F12) on the one side (the upper side in FIG. 12) in the length direction A1 as seen from the crop rows Vr15 to Vr17 is a non-travelable area F13 where the work vehicle 1 cannot travel, and the travel route R2 cannot be generated in the non-work area F12.

In the present embodiment, the following configuration is adopted in order to provide the travel control method, the travel control program, the travel control system 100, and the work vehicle 1, each of which can handle such a work site (field F1), where it is difficult to cause the work vehicle 1 to turn, around the work area F11.

More specifically, the travel control method according to the present embodiment is a travel control method for the work vehicle 1 that causes the work vehicle 1 to travel automatically along the work route R1, and includes the non-turning reciprocating travel as the travel mode of the work vehicle 1. The non-turning reciprocating travel is a travel mode in which, after the work vehicle 1 travels from a first end to a second end of the work route R1, the travel direction of the work vehicle 1 is reversed on the second end side without changing the orientation of the work vehicle 1, and the work vehicle then travels from the second end to the first end of the work route R1.

In short, in the present embodiment, when traveling on a certain work route R1, the work vehicle 1 turns back on the second end side by reversing the traveling direction without turning, and thereby travels on the work route R1 in a reciprocating manner. Here, the travel direction of the work vehicle 1 includes the forward travel and the reverse travel. In the non-turning reciprocating travel, the work vehicle 1 switches (reverses) the travel direction from the reverse travel to the forward travel or from the forward travel to the reverse travel on the second end side. In such non-turning reciprocating travel, the orientation of the work vehicle 1 is not changed during the reciprocating travel on the work route R1. Thus, the work vehicle 1 does not have to turn on the outside of the work area F11 (in the non-work area F12) and can be compatible with the work site (the field F1), where it is difficult to cause the work vehicle 1 to turn, around the work area F11. In addition, even in the state where the work vehicle 1 straddles the crop row Vr1, the work vehicle 1 can travel on the work route R1 in the reciprocating manner.

That is, in the travel control system 100 according to the present embodiment, the travel processing section 72 is configured to be able to execute the non-turning reciprocating travel in which, after the work vehicle 1 travels from the first end to the second end of the work route R1, the travel direction of the work vehicle 1 is reversed on the second end side without changing the orientation of the work vehicle 1, and the work vehicle 1 then travels from the second end to the first end of the work route R1. In this way, the work vehicle 1 can be compatible with the work site (the field F1), where it is difficult to cause the work vehicle 1 to turn, around the work area F11.

Hereinafter, the non-turning reciprocating travel will be described in more detail.

As illustrated in FIG. 12 and FIG. 13, in the case where the headland area (the non-work area F12) on the one side in the length direction A1 as seen from the crop rows Vr15 to Vr17 is the non-travelable area F13 (that is, the one-sided headland), the non-turning reciprocating travel of the work vehicle 1 is made in a manner to avoid the non-travelable area F13. More specifically, the work vehicle 1 makes the non-turning reciprocating travel on the work route R13 that is set on the crop row Vr15 and on the work route R14 that is set on the crop row Vr17. Meanwhile, on the work route R11 that is set on the crop row Vr11 and the work route R12 that is set on the crop row Vr13, the work vehicle 1 makes turning reciprocating travel.

Here, in each of the work routes R13, R14 on which the non-turning reciprocating travel is made, an end on the opposite side (a lower side in FIG. 12) to the non-travelable area F13 in the longitudinal direction (the length direction A1) is defined as respective one of first ends P31, P41, and an end on the non-travelable area F13 side (the upper side in FIG. 12) is defined as respective one of second ends P32, P42.

When the work route R13 is focused, the non-turning reciprocating travel is made as follows. After the work vehicle 1 travels from the first end P31 to the second end P32 of the work route R13, the travel direction of the work vehicle 1 is reversed on the second end p32 side without changing the orientation of the work vehicle 1, and the work vehicle 1 then travels from the second end P32 to the first end P31 of the work route R13. In short, as the target route R10, an outward route Ro13 from the first end P31 to the second end P32 and a return route Rr13 from the second end P32 to the first end P31 are generated for the one work route R13. In FIG. 12 and FIG. 13, the outward route Ro13 and the return route Rr13 are shifted in the width direction A2. However, in reality, both the outward route Ro13 and the return route Rr13 are routes that are formed on the one work route R13.

Here, the travel control method according to the present embodiment further includes specifying the travel direction of the work vehicle 1 at the time of entering the headland area (the non-work area F12) from the first end side of the work route R1 in the non-turning reciprocating travel. In short, for example, in a case of the work route R13, at the first end P31, the work vehicle 1 leaves the work area F11 for the non-work area F12 as the headland area after traveling on the return route Rr13. At this time, it is possible to specify whether the work vehicle 1 leaves for the non-work area F12 in the forward travel direction or the reverse travel direction. In this way, for example, it is possible to detect the obstacle that exists in the travel direction of the machine body 10 at the time of leaving for the non-work area F12 by using one of the obstacle detector 62 facing the front of the machine body 10 and the obstacle detector 62 facing the rear of the machine body 10. As a result, there is no need to mount the obstacle detectors 62, which exert the same performance, in the front and rear portions of the machine body 10. For example, even in the case where there is a difference in safety device, stop accuracy, or the like between the forward travel and the reverse travel due to structural restrictions, it is possible to detect and avoid the obstacle with a high degree of accuracy.

In particular, in the present embodiment, in the non-turning reciprocating travel, the travel direction of the work vehicle 1 at the time of leaving for the headland area (the non-work area F12) from the first end side of the work route R1 is fixed to the forward travel direction. In the present embodiment, the obstacle detector 62 that faces the front of the machine body 10 is more accurate than the obstacle detector 62 that faces the rear of the machine body 10. Accordingly, the work vehicle 1 leaves for the non-work area F12 while traveling forward. In this way, it is possible to detect the obstacle that exists in the travel direction of the machine body 10 with the high degree of accuracy.

More specifically, the work vehicle 1 makes the non-turning reciprocating travel such that the travel direction thereof is the forward travel direction at the time of leaving for the non-work area F12 from the first end side of the work route R1. For example, on the work route R13, the work vehicle 1 makes the non-turning reciprocating travel in such a posture that the front side of the machine body 10 faces the first end P31 side (the lower side of FIG. 12). That is, on the outward route Ro13 from the first end P31 to the second end P32, the work vehicle 1 travels reversely. On the return route Rr13 from the second end P32 to the first end P31, the work vehicle 1 travels forward.

Accordingly, when entering the work route R13 from the first end P31, the work vehicle 1 is controlled such that the travel direction thereof is the reverse travel direction. Thus, in the non-work area F12 on the first end P31 side (the lower side in FIG. 12) of the work route R13, a turn-around route R3 that connects a terminal end of the work route R12 and the start end (the first end P31) of the work route R13 is generated. The turn-around route R3 includes: a first route R31 on which the work vehicle 1 that have finished traveling on the work route R12 continues to travel forward; and a second route R32 on which the work vehicle 1 travels reversely. The second route R32 is a route that extends to the first end P31 side of the work route R13.

That is, as illustrated in FIG. 13, while traveling on the turn-around route R3, the work vehicle 1 makes switch-back travel in which the travel direction (the forward travel/the reverse travel) is switched, and can thereby enter the work route R13 from the first end P31 in the reverse travel direction. In FIG. 13, "1-1" represents the work vehicle 1 that is traveling forward on the first route R31, "1-2" represents the work vehicle 1 that is traveling reversely on the second route R32, "1-3" represents the work vehicle 1 that is traveling reversely on the outward route Ro13, and "1-4" represents the work vehicle 1 that is traveling forward on the return route Rr13.

By the way, the work vehicle 1 performs the work on the work target row (the crop row Vr1), which includes the plural work objects (crops V1), while traveling automatically along the work target row (the crop row Vr1). In this way, the work vehicle 1 can efficiently perform the work (herein, the spraying work) on the crop row Vr1, which is an example of the work target row.

Here, the work vehicle 1 performs the work on the one work target row (the crop row Vr1) while making the non-turning reciprocating travel on the work route R1 along the work target row (the crop row Vr1). In particular, in the present embodiment, the work vehicle 1 can travel in the posture of straddling the work target row (the crop row Vr1). Thus, the work vehicle 1 can efficiently perform the work (herein, the spraying work) on the work target row (the crop row Vr1), which is located at the position of being straddled by the work vehicle 1, during the non-turning reciprocating travel on the work route R1.

However, the travel control method according to the present embodiment does not cause the work vehicle 1 to always perform the work during the non-turning reciprocating travel, but causes the work vehicle 1 to perform the work only when the work vehicle 1 travels in the specific travel direction during the non-turning reciprocating travel. In this way, the timing at which the work vehicle 1 performs the work can be limited only to the time when the work vehicle 1 travels in the specific travel direction (forward travel/reverse travel), which simplifies management of the work by the work vehicle 1.

Here, the specific travel direction is the forward travel direction. That is, the work vehicle 1 performs the work (herein, the spraying work) only when traveling forward in the non-turning reciprocating travel. In the present embodiment, in particular, since the work machine 400 is arranged in the rear portion of the machine body 10, the machine body 10 is less likely to be exposed to the spray material (the chemical solution or the like) that is sprayed from the work machine 400 (the sprayer 401). Thus, for example, it is possible to simplify or omit a configuration or the like for protecting the machine body 10 against the spray material.

In other words, in the non-turning reciprocating travel, the travel control method causes the work vehicle 1 to perform the work only on one of the outward route Ro13, on which the work vehicle 1 travels from the first end P31 to the second end P32, and the return route Rr13, on which the work vehicle 1 travels from the second end P32 to the first end P31. In the present embodiment, as described above, the work vehicle 1 performs the work (herein, the spraying work) only on the return route Rr13 on which the work vehicle 1 travels forward. This enables the efficient work that prevents the overlapping work on the same work objects (the crops V1) on both of the outward route Ro13 and the return route Rr13.

Similarly, when the work route R14 is focused, the non-turning reciprocating travel is made as follows. After the work vehicle 1 travels from the first end P41 to the second end P42 of the work route R14, the travel direction of the work vehicle 1 is reversed on the second end p42 side without changing the orientation of the work vehicle 1, and the work vehicle 1 then travels from the second end P42 to the first end P41 of the work route R14. In short, as the target route R10, an outward route Ro14 from the first end P41 to the second end P42 and a return route Rr14 from the second end P42 to the first end P41 (the work end position Pg1) are generated for the one work route R14. In FIG. 12 and FIG. 13, the outward route Ro14 and the return route Rr14 are shifted in the width direction A2. However, in reality, both the outward route Ro14 and the return route Rr14 are routes that are formed on the one work route R14.

Similar to the work route R13, when making the non-turning reciprocating travel on the work route R14, the work vehicle 1 enters the work route R14 in reverse from the first end P41 through the turn-around route R3 that connects the terminal end (the first end P31) of the work route R13 and the start end (the first end P41) of the work route R14. Then, on the outward route Ro14 from the first end P41 to the second end P42, the work vehicle 1 travels reversely. On the return route Rr14 from the second end P42 to the first end P41, the work vehicle 1 travels forward. Furthermore, the work vehicle 1 performs the work (herein, the spraying work) only on the return route Rr14 on which the work vehicle 1 travels forward.

By the way, in the examples illustrated in FIG. 12 and FIG. 13, the work vehicle 1 does not make the non-turning reciprocating travel on the entire work route R1, and only makes the non-turning reciprocating travel on the work routes R13, R14 as parts of the work route R1. The other work routes R11, R12 are connected by the travel route R2 for causing the work vehicle 1 to turn, and the work vehicle 1 makes the turning reciprocating travel. Just as described, in the present embodiment, the travel modes of the work vehicle 1 include the non-turning reciprocating travel and the turning reciprocating travel, and the non-turning reciprocating travel/the turning reciprocating travel is selected for each work route R1. Thus, the non-turning reciprocating travel and the turning reciprocating travel are made in the one field F1.

That is, the travel control method according to the present embodiment further includes: making the turning reciprocating travel, in which after the work vehicle 1 travels from the first end to the second end of the work route R1, the work vehicle 1 turns on the second end side and then travels from the second end side to the first end side of the work route R12; and selecting the non-turning reciprocating travel or the turning reciprocating travel for each work route R1. In the examples illustrated in FIG. 12 and FIG. 13, of the work routes R11 to R14, the turning reciprocating travel is selected for the work routes R11, R12, and the non-turning reciprocating travel is selected for the work routes R13, R14. In this way, the different travel mode can be applied for each place in the field F1, and thus the further efficient work can be performed.

In particular, in the present embodiment, the non-turning reciprocating travel is selected on the work route R1 on which it is difficult for the work vehicle 1 to turn on the second end side. In this way, the non-turning reciprocating travel can be applied only for the work route R1, on which it is difficult to make a turn, in the field F1 having the headland on one side, and the turning reciprocating travel can be applied to the rest of the work route R1. As a result, it is possible to minimize a work time while enlarging a workable area.

### [3.3] Change Processing

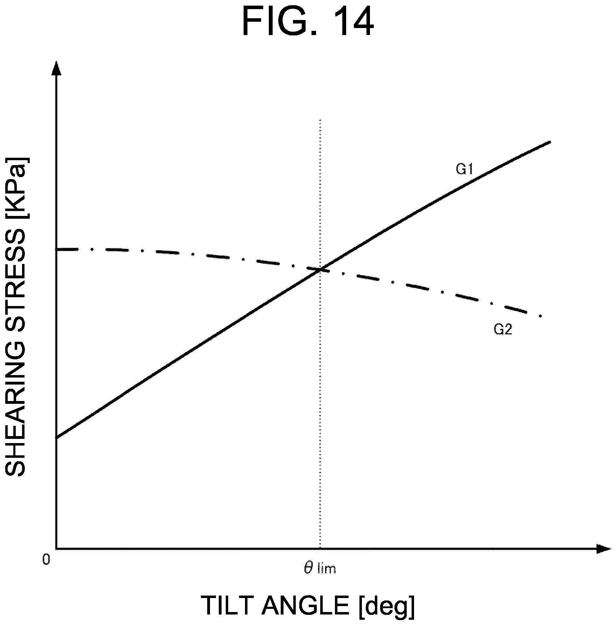

Next, a description will be made on the change processing, in which the change processing section 74 changes the acceleration upper limit value, with reference to FIG. 14 to FIG. 18.

It is assumed that the upper limit value of the acceleration (the acceleration upper limit value) at the time of accelerating or decelerating the work vehicle 1 is a fixed value. In such a case, for example, when the work vehicle 1 is accelerated rapidly in the field F1 (the work site) under a steep road surface condition or a slippery road surface condition due to pebbles, mud, or the like, the crawlers 111L, 111R possibly idle (slip), leading to route deviation, getting stuck, or the like. In the present invention, in order to provide a travel control method, a travel control program, the travel control system 100, and the work vehicle 1 that suppress a slip during the travel, the following configuration is adopted.

In the present embodiment, as described above, the upper limit value of the acceleration (the acceleration upper limit value) until the vehicle speed (the moving speed) of the work vehicle 1 reaches the target speed is not fixed to the constant value, but is changed by the change processing section 74 according to the slip condition related to the slip that occurs during the travel of the work vehicle 1.

More specifically, the travel control method according to the present embodiment includes: acquiring the slip condition related to the slip that occurs during the travel of the work vehicle 1; and changing the acceleration upper limit value, which is the upper limit value of the acceleration until the vehicle speed of the work vehicle 1 reaches the target speed. Basically, the change processing section 74 reduces the acceleration upper limit value in a situation where the work vehicle 1 is likely to slip, and increases the acceleration upper limit value in a situation where the work vehicle 1 is less likely to slip.

The travel control method according to the present embodiment further includes: causing the work vehicle 1 to travel automatically by the travel processing section 72. The acceleration upper limit value is an upper limit value of the acceleration at the time when the vehicle speed of the work vehicle 1 is increased from the current vehicle speed to a target vehicle speed during the automatic travel. In short, the travel processing section 72 controls the vehicle speed of the work vehicle 1 by accelerating or decelerating the work vehicle 1 in a manner to set the vehicle speed of the work vehicle 1 to the target vehicle speed from the current vehicle speed during the automatic travel of the work vehicle 1. At the time of the acceleration or the deceleration during such automatic travel, the upper limit value of the acceleration is defined by the acceleration upper limit value that is changed by the change processing section 74.

As a result, during the automatic travel, under a situation where the slip is likely to occur, such as the slippery road surface condition, the work vehicle 1 is slowly accelerated or decelerated, and thus the occurrence of the slip is avoided easily. Meanwhile, under a situation where the slip is less likely to occur, the work vehicle 1 can be accelerated or decelerated promptly, which leads to improvement in work efficiency.

Hereinafter, a description will be made on a specific example of how the change processing section 74 changes the acceleration upper limit value according to the slip condition.

As a premise, shear strength τ of a ground surface of the field F1 (the work site) is expressed by "τ = c + σ · tan(φ)" by using an adhesive force c, vertical stress σ, and a shear resistance angle (an internal friction angle) φ. When the shearing stress generated by the crawlers 111 L, 111R during the travel of the machine body 10 exceeds the shear strength τ, soil on the ground surface slips to cause the crawlers 111L, 111R to idle. Accordingly, for example, in a case of the field F1, the ground surface of which is covered with the pebbles, the adhesive force c is small, and thus the shear strength τ is also small. As a result, even when the same shearing stress is applied, the crawler 111L, and the 111R are likely to idle. Meanwhile, for example, in a case of the wet clayed field F1, the adhesive force c is large, but the shear resistance angle φ is small. Thus, the shear strength τ is small. As a result, even when the same shearing stress is applied, the crawler 111L, 111R are likely to idle.

FIG. 14 is a graph illustrating an example of total shearing stress G1, for which weight, the acceleration, a work load, and the like of the work vehicle 1 are taken into consideration, and shear strength G2 of the ground, to which ground parameters such as the adhesive strength c and the shearing resistance angle φ are reflected, in association with an inclination angle of the field F1 (the work site). In FIG. 14, a horizontal axis represents the inclination angle (deg) of the field F1, and a vertical axis represents the shearing stress (KPa). In FIG. 14, when the total shearing stress G1 exceeds the shear strength G2, the crawlers 111L, 111R idle. Thus, when an angle θlim at which the total shearing stress G1 and the shear strength G2 intersect becomes larger than the inclination angle, the crawlers 111L, 111R idle. Hereinafter, the inclination angle (θlim) at the time when the total shearing stress G1 and the shear strength G2 intersect will be referred to as "maximum inclination" of the field F1.

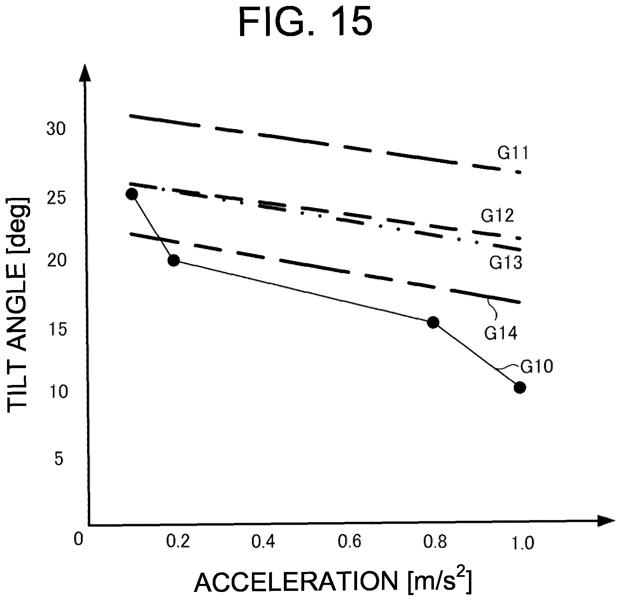

Here, FIG. 15 is a graph illustrating a relationship between the maximum inclination of the field F1 and the acceleration of the work vehicle 1 with the acceleration (m/s²) as a horizontal axis and the inclination angle (deg) as a vertical axis. FIG. 15 illustrates an example of the maximum inclination for each representative ground parameter while the acceleration of the work vehicle 1 as a manipulatable parameter is changed. In FIG. 15, a graph G11 in a case where the soil is mud (silt), a graph G12 in a case of gravel, a graph G13 in a case of low-plasticity clay, and a graph G14 in a case of muddy clay are illustrated. For example, in a case of the silty field F1, the acceleration that corresponds to the inclination angle of the field F1 is applied in a manner to fall within a range below the graph G11. In this way, idling of the crawlers 111L, 111R can be avoided.

In the present embodiment, as an example, in order to avoid idling of the crawlers 111L, 111R on various soils, as indicated by the graph G10 in FIG. 15, the upper limit value of the acceleration (the acceleration upper limit value) that corresponds to the inclination angle of the field F1 is set. Here, the inclination angle of the field F1 is identified by the inclination of the machine body 10 of the work vehicle 1 in the front-rear direction D3. The inclination of the machine body 10 of the work vehicle 1 in the front-rear direction D3 is detected by the IMU of the sensor device 66.

That is, in the present embodiment, the slip condition includes a condition related to the inclination of the work vehicle 1 in the front-rear direction D3. In this way, even when the inclination angle of the field F1 is not measured directly, the slip condition can be acquired on the basis of the inclination of the work vehicle 1 in the front-rear direction D3.

Here, as indicated by the graph G10 in FIG. 15, the acceleration upper limit value is reduced as the inclination (in the front-rear direction D3) of the work vehicle 1 is increased. In short, as the inclination of the work vehicle 1 (corresponding to the inclination angle of the field F1) is increased, the crawlers 111L, 111R are more likely to idle. For this reason, the change processing section 74 reduces the acceleration upper limit value. Meanwhile, as the inclination of the work vehicle 1 (corresponding to the inclination angle of the field F1) is reduced, the crawlers 111L, 111R are less likely to idle. Thus, the change processing section 74 increases the acceleration upper limit value. As a result, under the situation where the slip is likely to occur, the work vehicle 1 is slowly accelerated or decelerated, and thus the occurrence of the slip is avoided easily.

In the present embodiment, the acceleration upper limit value is validated only during a limitation target time that is one of the acceleration time and the deceleration time of the work vehicle 1. As an example, in the case where the acceleration time of the work vehicle 1 is the limitation target time, the travel processing section 72 limits the upper limit of the acceleration of the work vehicle 1 to the acceleration upper limit value or lower only during the acceleration time (the limitation target time) of the work vehicle 1. In this case, the acceleration upper limit value is invalidated during the deceleration time of the work vehicle 1. Thus, the travel processing section 72 does not limit the upper limit of the acceleration of the work vehicle 1 to the acceleration upper limit value or lower. Accordingly, when there is no need to limit the upper limit of the acceleration, the acceleration of the work vehicle 1 is not limited. Thus, the work efficiency of the work vehicle 1 can be improved.

Here, according to a direction of the inclination with respect to the travel direction of the work vehicle 1, the acceleration time or the deceleration time of the work vehicle 1 is selected as the limitation target time. That is, depending on whether the direction of the inclination of the field F1 is "upward" or "downward" with respect to the travel direction of the work vehicle 1, either one of the acceleration time or the deceleration time is selected as the limitation target time. Accordingly, when there is no need to limit the upper limit of the acceleration, the acceleration of the work vehicle 1 is not limited. Thus, the work efficiency of the work vehicle 1 can be improved.

More specifically, when the inclination is upward with respect to the travel direction of the work vehicle 1, the acceleration time is set as the limitation target time. When the inclination is downward with respect to the travel direction of the work vehicle 1, the deceleration time is set as the limitation target time. In short, for example, during the deceleration time in the case where the inclination is upward with respect to the travel direction of the work vehicle 1, the direction of the shear stress, which is generated by the crawlers 111L, 111R, is opposite to a direction of gravity. Thus, the slip caused by the deceleration is less likely to occur. Similarly, during the acceleration time in a case where the inclination is downward with respect to the travel direction of the work vehicle 1, the direction of the shear stress, which is generated by the crawlers 111L, 111R, is opposite to the direction of gravity. Thus, the slip caused by the acceleration is less likely to occur.

Accordingly, under such a situation where the slip caused by the acceleration/deceleration is less likely to occur, the acceleration of the work vehicle 1 is not limited. Thus, the work efficiency of the work vehicle 1 can be improved.

In addition, in the present embodiment, at least one of ON/OFF and a magnitude of the change of the acceleration upper limit value can be set as a setting item. That is, the change processing section 74 does not always change the acceleration upper limit value (according to the slip condition), and can set at least one of ON/OFF and the magnitude of the change of the acceleration upper limit value.

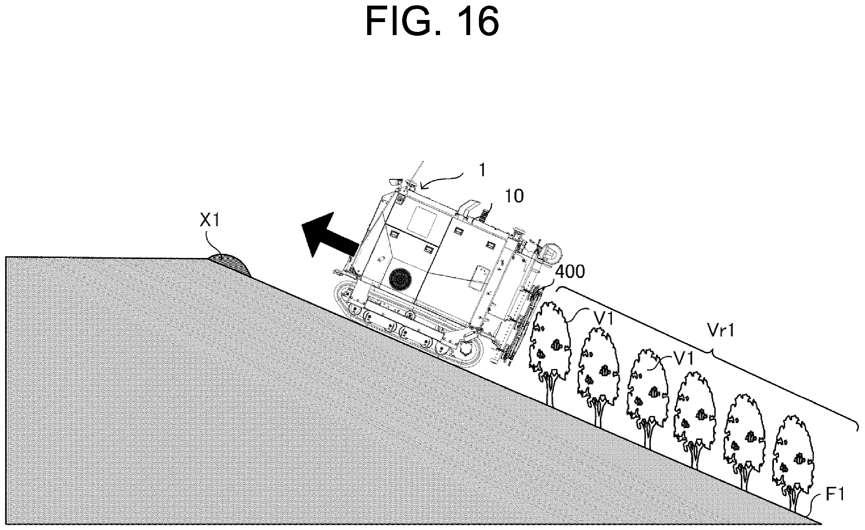

More specifically, in the example illustrated FIG. 16, such a situation is assumed that the work vehicle 1 travels forward in the field F1 in a manner to ascend the slope along the crop row Vr1, and, at a point when the work vehicle 1 passes through the crop row Vr1, terminates the work, sets the vehicle speed to zero (0), and is stopped. In this case, in order for the work vehicle 1 to accelerate again and pass through the work area F11, the work vehicle 1 has to finish ascending the subsequent slope (uphill) by traveling forward. Furthermore, as illustrated in FIG. 16, in the case where there is an obstacle X1 such as a bump or a step ahead of the work vehicle 1 in the travel direction, it is necessary to accelerate the work vehicle 1 to the vehicle speed that is sufficient for the work vehicle 1 to travel over the obstacle X1.

However, in the case where the acceleration upper limit value is reduced as the inclination (in the front-rear direction D3) of the work vehicle 1 is increased, for example, as illustrated in FIG. 16, the upper limit value of the acceleration of the work vehicle 1 is significantly reduced in the steeply sloped field F1, which makes it difficult for the work vehicle 1 to travel over the obstacle X1. Just as described, since there is a situation where it is not preferred to change the acceleration upper limit value, in the present embodiment, at least one of ON/OFF and the magnitude of the change of the acceleration upper limit value can be set. That is, in the situation as illustrated in FIG. 16, it is possible to avoid the acceleration upper limit value from becoming too small by turning OFF or suppressing the magnitude of the change of the acceleration upper limit value to be small.

In particular, in the present embodiment, the setting item (at least one of ON/OFF and the magnitude of the change of the acceleration upper limit value) is set according to the manipulation by the user. In this way, as in a situation as illustrated in FIG. 16, it is possible to turn OFF or suppress the magnitude of the change of the acceleration upper limit value to be small according to the manipulation by the user, for example.

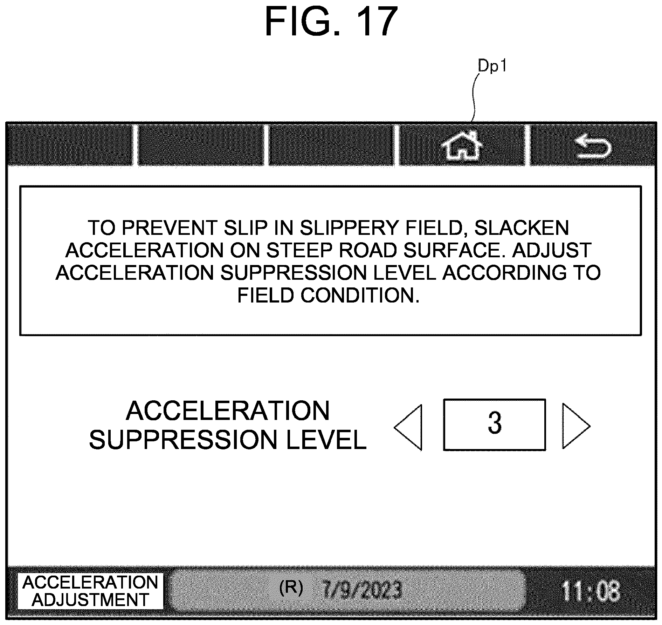

More specifically, on an acceleration adjustment screen Dp1 as illustrated in FIG. 17, a manipulation to adjust the magnitude of the change of the acceleration upper limit value by the user (the manipulator) is accepted. The acceleration adjustment screen Dp1 is a screen that is displayed on, for example, the display section 211 of the first manipulation terminal 210 or the display section 611 of the user interface 61 by the display processing section 77.

On the acceleration adjustment screen Dp1, for example, such a message that urges the user (the manipulator) to adjust the magnitude of the change of the acceleration upper limit value is displayed, "TO PREVENT SLIP IN SLIPPERY FIELD, SLACKEN ACCELERATION ON STEEP ROAD SURFACE. ADJUST ACCELERATION SUPPRESSION LEVEL ACCORDING TO FIELD CONDITION". On the acceleration adjustment screen Dp1, an "ACCELERATION SUPPRESSION LEVEL" that can be changed by manipulating a cursor key is displayed. The acceleration suppression level is a parameter that defines the magnitude of the change of the acceleration upper limit value in stages.

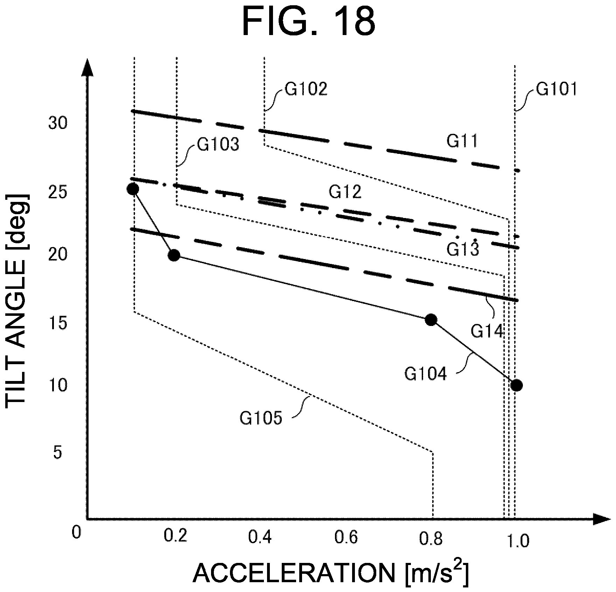

FIG. 18 illustrates an example of graphs G101 to G105, each of which represents the upper limit value of the acceleration (the acceleration upper limit value) according to the inclination angle of the field F1 for each of the acceleration suppression levels. Similar to FIG. 15, FIG. 18 is a graph illustrating the relationship between the maximum inclination of the field F1 and the acceleration of the work vehicle 1 with the acceleration (m/s²) as a horizontal axis and the inclination angle (deg) as a vertical axis. FIG. 18 illustrates the graph G101 at the time when the acceleration suppression level is "1", the graph G102 at the time when the acceleration suppression level is "2", the graph G103 at the time when the acceleration suppression level is "3", the graph G104 at the time when the acceleration suppression level is "4", and the graph G105 at the time when the acceleration suppression level is "5". As apparent from FIG. 18, as the acceleration suppression level is increased, the magnitude of the change of the acceleration upper limit value is increased.

Here, the description has been made on the example in which, during the automatic travel of the work vehicle 1, the upper limit value of the acceleration at the time of bringing the current speed to the target vehicle speed is limited to the acceleration upper limit value. However, the present invention is not limited thereto. That is, also during the manual travel of the work vehicle 1, the upper limit value of the acceleration at the time of bringing the current vehicle speed to the target vehicle speed may be limited to the acceleration upper limit value.

### [3.4] Stop Processing and Restart Processing

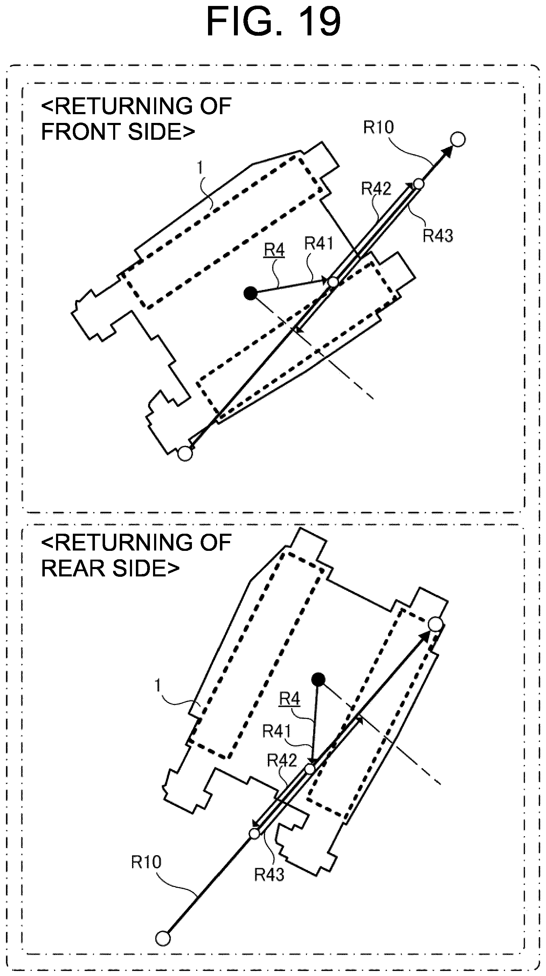

Next, a description will be made on the stop processing by the stop processing section 75 and the restart processing by the restart processing section 76 with reference to FIG. 19 to FIG. 22.

During the automatic travel of the work vehicle 1, the "route deviation" possibly occurs in which the crawlers 111L, 111R idle (slip) due to presence of "mud" or the like, for example, on the travel route (the target route R10), and the work vehicle 1 deviates from the travel route (the target route R10). When the work vehicle 1 deviates from the travel route (the target route R10) during the automatic travel, it is considered that thereafter the manipulator manually manipulates the work vehicle 1 to make the work vehicle 1 return onto the travel route. However, in this case, the manipulator has to go to the vicinity of the work vehicle 1 in the field F1 (the work site) in order to check the status of the work vehicle 1 and manually manipulate the work vehicle 1. Consequently, a problem of the reduced work efficiency arises.

In the present embodiment, the following configuration is adopted in order to provide the travel control method, the travel control program, the travel control system 100, and the work vehicle 1, with each of which the work efficiency is less likely to be reduced.

The travel control method according to the present embodiment includes: causing the work vehicle 1 to automatically travel on the travel route; stopping the automatic travel when the work vehicle 1 deviates from the travel route during the automatic travel of the work vehicle 1; and causing the work vehicle 1 to return onto the travel route and restart the automatic travel when the restart condition is satisfied during the stop of the automatic travel. In the present embodiment, as described above, the travel route is common to (the same as) the target route R10.

With this configuration, in the case where the work vehicle 1 deviates from the travel route (the target route R10), and the automatic travel is stopped, the work vehicle 1 automatically returns onto the travel route (the target route R10) and restarts the automatic travel by satisfying the restart condition after the restart condition is satisfied. This configuration has an advantage as follows. It is not essential for the manipulator to go to the vicinity of the work vehicle 1 in the field F1 (the work site) in order to check the status of the work vehicle 1 and manually manipulate the work vehicle 1. Thus, the work efficiency is less likely to be reduced.

In the present embodiment, as described above, when the work vehicle 1 deviates from the travel route (the target route R10), the stop processing section 75 stops the work vehicle 1 on the spot by stopping the automatic travel. However, the stop position of the work vehicle 1 varies due to a braking distance and the like. Then, when the restart condition is satisfied while the work vehicle 1 is stopped, the restart processing section 76 causes the work vehicle 1 to return onto the travel route and then causes the work vehicle 1 to restart the automatic travel.

In the present embodiment, the restart condition includes a restart manipulation by the user. More specifically, the restart condition includes a specific restart manipulation pby the manipulator (the user) on the first manipulation terminal 210 or the second manipulation terminal 220. Thus, when the work vehicle 1 deviates from the travel route (the target route R10), and the automatic travel is stopped, the manipulator performs the restart manipulation on the first manipulation terminal 210 or the second manipulation terminal 220. In this way, the automatic travel of the work vehicle 1 can be restarted without the need for the manipulator to go to the vicinity of the work vehicle 1. This reduces time and effort of the manipulator, and the reduction in the work efficiency can be suppressed to be small.

Here, as illustrated in FIG. 19, the restart processing section 76 generates the return route R4 on which the work vehicle 1 travels in order to return onto the travel route (the target route R10). That is, when the restart condition is satisfied, the restart processing section 76 generates the return route R4 separately from the target route R10, causes the work vehicle 1 to travel along this return route R4, and thereby causes the work vehicle 1 to return onto the target route R10. The return route R4 is generated every time the route deviation occurs. Thus, it is possible to perform the return operation according to the situation when the automatic travel is stopped.

When detecting at least one of lateral deviation abnormality and azimuth deviation abnormality, the stop processing section 75 determines the route deviation and stops the automatic travel of the work vehicle 1. The lateral deviation abnormality means that lateral deviation, that is, a deviation amount of the current position of the machine body 10 from the target route R10 in a direction orthogonal to the target route R10 indicates an abnormal value. The azimuth deviation abnormality means that azimuth deviation, that is, a deviation amount of the travel direction (azimuth) of the machine body 10 from the target route R10 indicates an abnormal value.

The restart processing section 76 enters a restart waiting state only when both of the following conditions are satisfied. The conditions are that the automatic travel is stopped due to at least one of the lateral deviation abnormality and the azimuth deviation abnormality (that is, the route deviation) during the automatic travel, and that each of the lateral deviation and the azimuth deviation of the stopped work vehicle 1 is smaller than a predetermined limit value. Thereafter, the restart processing section 76 restarts the automatic travel when the restart condition is satisfied. That is, in the case where the automatic travel of the work vehicle 1 is stopped due to the route deviation, and at least one of the lateral deviation and the azimuth deviation of the stopped work vehicle 1 is equal to or larger than the limit value, the automatic travel is not restarted even when the restart condition is satisfied.

Just as described, in the present embodiment, when the deviation amount of the work vehicle 1 from the travel route is equal to or larger than the limit value, the restart processing section 76 stops the return operation to the travel route. When the deviation amount is large, there is a high possibility that the machine body 10 is in contact with the crop V1 on the target route R10. Thus, in the case where the automatic travel is performed in this state, the crop V1 may be damaged, or the work vehicle 1 may not perform the assumed operation. For this reason, in such a situation, the work vehicle 1 is not brought into the restart waiting state and is prohibited from performing the return operation to the travel route.

For example, the display device 65 or the like preferably notify the surroundings of whether the work vehicle 1 is in the restart waiting state. That is, in the case where the work vehicle 1 is in the restart waiting state, the manipulator around the field F1 can be notified that the restart manipulation can be performed by normal lighting of the display device 65. Meanwhile, in the case where, for example, the deviation amount is equal to or larger than the limit value, and thus the work vehicle 1 is not in the restart waiting state, the manipulator around the field F1 can be notified that the restart manipulation cannot be performed by abnormal lighting (for example, red lighting) of the display device 65.

Hereinafter, in particular, the restart processing by the restart processing section 76 will be described in more detail.

In the present embodiment, the restart processing section 76 specifies the return item that includes at least one of a moving direction and a return position of the work vehicle 1 at the time when the work vehicle 1 returns onto the travel route. That is, in the return operation to cause the work vehicle 1 to return onto the travel route (the target route R10), at least one of the moving direction (forward/reverse) of the work vehicle 1 and where the work vehicle 1 is made to return (the return position) is specified as the return item.

FIG. 19 illustrates the return route R4 when the work vehicle 1 returns onto the travel route (the target route R10) from a state where the work vehicle 1 deviates from the travel route (the target route R10). Here, as the return item, when the moving direction of the work vehicle 1 is specified as the "foward", as illustrated in an upper part of FIG. 19, the work vehicle 1 returns onto the travel route (the target route R10) by traveling forward along a first return route R41 and a second return route R42 and traveling reversely along a third return route R43. Meanwhile, as the return item, when the moving direction of the work vehicle 1 is specified as "reverse", as illustrated in a lower part of FIG. 19, the work vehicle 1 returns onto the travel route (the target route R10) by traveling forward along the first return route R41 and the second return route R42 and traveling reversely along the third return route R43.

In this way, by specifying at least one of the moving direction and the return position of the work vehicle 1 as the return item, it is possible to perform the further flexible return operation according to the situation at the time when the automatic travel is stopped.

Here, the return item is specified on the basis of at least one of the current position and the posture of the work vehicle 1, and an inclination direction (of the inclined surface of the field F1). For example, the moving direction (forward/reverse) of the work vehicle 1 as the return item in the return operation is specified on the basis of a current position and a posture (the direction of the front end portion of the machine body 10 in the plan view) of a reference point (for example, a center point) of the machine body 10.

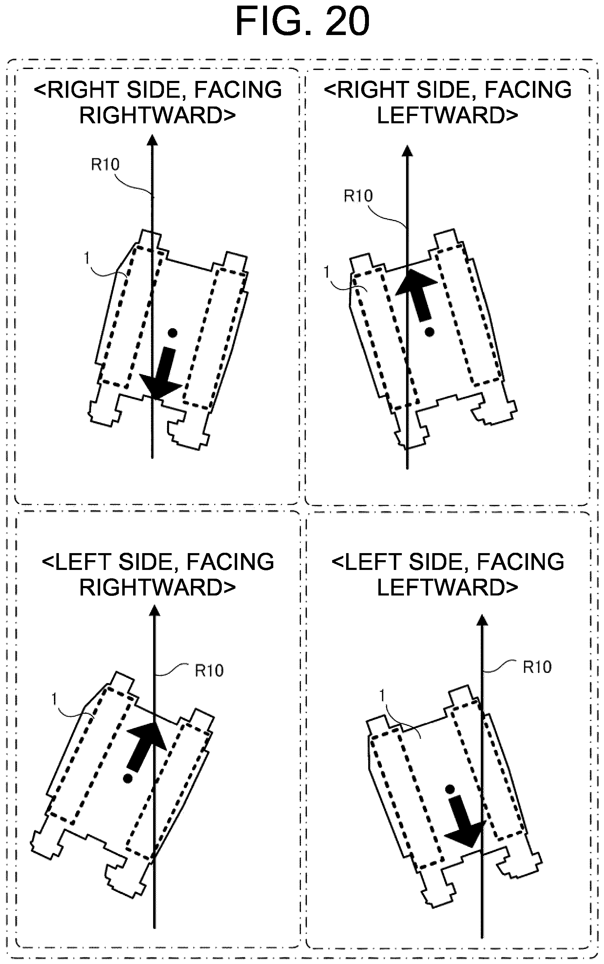

FIG. 20 illustrates corresponding relationships among the current position and the posture of the work vehicle 1 and the moving direction (forward/reverse) of the work vehicle 1 in the return operation. More specifically, when the current position of (the reference point of) the machine body 10 is on the right side of the target route R10 (the travel route), and (the front end portion of) the machine body 10 is in a posture facing rightward, as illustrated in an upper left part of FIG. 20, the moving direction of the work vehicle 1 in the return operation is "reverse". Meanwhile, when the current position of the machine body 10 is on the right side of the target route R10, and the machine body 10 is in a posture facing leftward, as illustrated in an upper right part of FIG. 20, the moving direction of the work vehicle 1 in the return operation is "forward".

Similarly, when the current position of (the reference point of) the machine body 10 is on the left side of the target route R10 (the travel route) and (the front end portion of) the machine body 10 is in the posture facing rightward, as illustrated in a lower left part of FIG. 20, the moving direction of the work vehicle 1 in the return operation is "forward". Meanwhile, when the current position of the machine body 10 is on the left side of the target route R10, and the machine body 10 is in the posture facing leftward, as illustrated in a lower right part of FIG. 20, the moving direction of the work vehicle 1 in the return operation is "reverse".

Just as described, the return item (the moving direction or the like of the work vehicle 1 in the return operation) is specified on the basis of (at least one of) the current position and the posture of the work vehicle 1. As a result, for example, the machine body 10 is less likely to come into contact with the crop V1 on the target route R10.

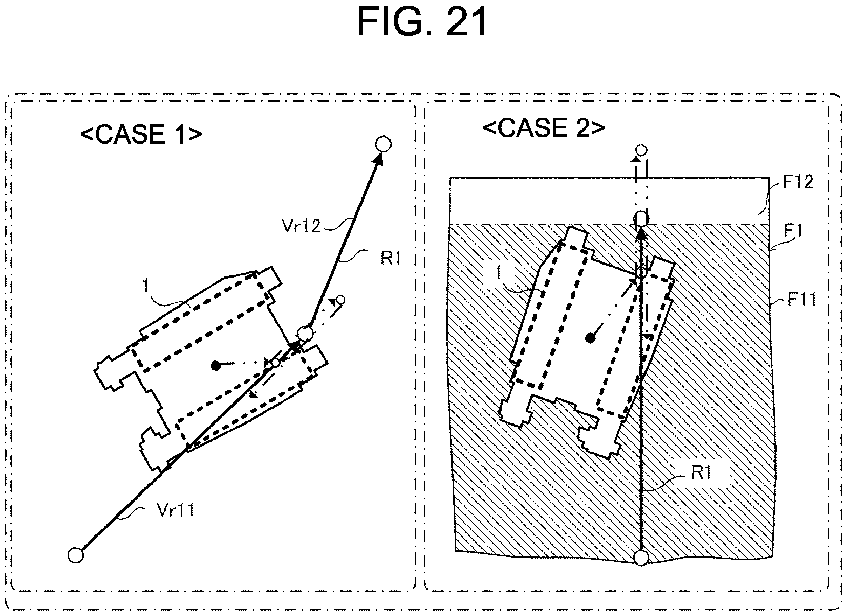

Alternatively, as in cases 1, 2 illustrated in FIG. 21, when the current position of the work vehicle 1 satisfies a specific condition, the moving direction illustrated in FIG. 20 is not followed. That is, for example, in the example of the case 1 illustrated on a left side in FIG. 21, since the crop row Vr12 that intersects the crop row Vr11 exists behind (in front in the travel direction) the end point of the currently worked crop row Vr11. Thus, when the work vehicle 1 moves "forward" in the return operation of the work vehicle 1, the machine body 10 may come into contact with the crop row Vr12. In the example of the case 2 illustrated on a right side in FIG. 21, the headland area (the non-work area F12) that exists behind (in front in the travel direction) the end point of the work route R1 is narrow, and it is difficult for the work vehicle 1 to enter. Thus, when the work vehicle 1 moves "forward" in the return operation of the work vehicle 1, the machine body 10 may protrude from the field F1.

Accordingly, for example, when the current position of the work vehicle 1 is near the end point of the work route R1, the moving direction of the work vehicle 1 in the return operation is set to "reverse". Meanwhile, when the current position of the work vehicle 1 is near the start point of the work route R1, the moving direction of the work vehicle 1 in the return operation is set to "forward".

In regard to the inclination direction (of the inclined surface of the field F1), basically, the moving direction of the work vehicle 1 is preferably specified such that the work vehicle 1 travels in a downward direction during the return operation. In this way, in association with the gravity, it possible to reduce the load applied to the work vehicle 1 during the return operation. The inclination direction can be detected by the IMU of the sensor device 66, for example.

Furthermore, the return item is preferably specified on the basis of a factor causing the deviation of the work vehicle 1 from the travel route. As an example, when the route deviation occurs due to a fact that the work vehicle 1 has traveled through a local obstacle point such as the "mud" or the "step" (including a dent), the moving direction of the work vehicle 1 in the return operation is specified as "forward" as the return item. In short, when the obstacle point exists on the travel route (the target route R10), the work vehicle 1 is made to move "reversely" and return onto the travel route. As a result, the work vehicle 1 passes through the obstacle point again. Thus, the obstacle point can be avoided when the work vehicle 1 moves "forward". As a result, the work vehicle 1 can easily return onto the travel route.

Here, the factor of the route deviation is estimated to be "mud", for example, when each of a stuck rate and a slip rate is equal to or higher than a threshold value. The stuck rate is calculated by dividing a difference between the vehicle speed and the driving speed of the crawlers 111 L, 111R by the vehicle speed. The slip rate is calculated by dividing a difference between the driving speed of the crawlers 111 L, 111R and the vehicle speed by the driving speed of the crawlers 111 L, 111R. Here, it is estimated that the factor of the route deviation is the "step", for example, when at least one of a pitch angle and a roll angle of the machine body 10 is changed by the threshold value or larger within a certain period.

In addition, the return position includes a position on the travel route where the work vehicle 1 has already traveled. That is, the work vehicle 1 can return to the position on the travel route (the target route R10) where the work vehicle 1 has already traveled. In this way, after the work vehicle 1 is brought into the state before the route deviation, the automatic travel can be restarted.

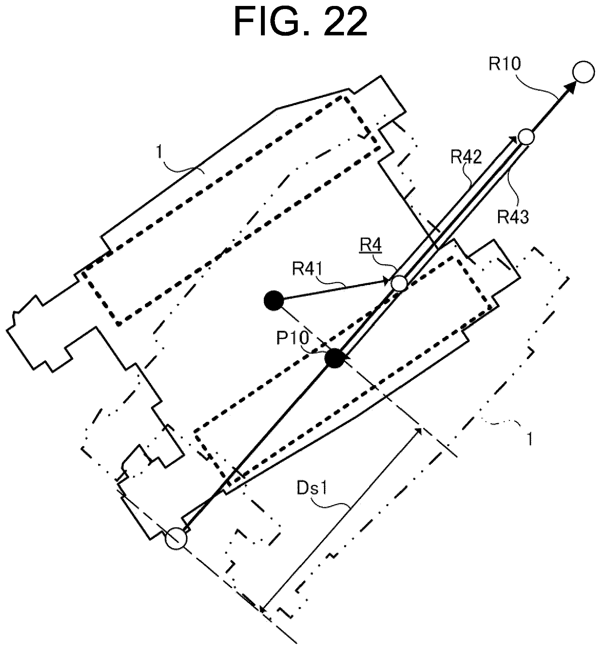

In the present embodiment, in particular, the return position is a position where the work vehicle 1 has interrupted the work. That is, for example, as illustrated in FIG. 22, the position where the work is interrupted due to the route deviation is set as a work completion position P10. The work vehicle 1 travels forward on the first return route R41 and the second return route R42 to return onto the travel route (the target route R10), thereafter travels reversely on the target route R10 along the third return route R43, and thereby moves to the work completion position P10. The return to the work completion position P10 is determined on the basis of whether the work vehicle 1 has traveled for a start distance Ds1 from a start point of the current segment to the work completion position P10.

When the work vehicle 1 returns to the position where the work is interrupted, just as described, the work can be restarted from the position where the work is interrupted at the restart of the automatic travel. Thus, it is possible to reduce unevenness of the work. However, whether to make the work vehicle 1 return to the work completion position P10 may be selectable by the user's manipulation, for example. In the case where the work vehicle 1 is not made to return to the work completion position P10, in the example illustrated in FIG. 22, the work vehicle 1 travels forward on the first return route R41 and the second return route R42 and returns onto the travel route (the target route R10). Then, the work vehicle 1 restarts the automatic travel from such a position.

In addition, when a road surface condition at the work completion position P10 or in the vicinity thereof is bad, the work vehicle 1 may not return to the work completion position P10. That is, in the case where the local obstacle point, such as the "mud" or the "step" (including the dent), exists at the work completion position P10 or in the vicinity thereof, there is a high possibility that the route deviation occurs again when the work vehicle 1 returns to the work completion position P10. In order to avoid the above, the work vehicle 1 may not return to the work completion position P10, and the automatic travel may be restarted from the position at which the work vehicle 1 has returned to the travel route (the target route R10).

By the way, the restart processing section 76 determines whether to allow returning by any one of return methods. When it is determined that returning cannot be performed, returning is performed by another return method. That is, the restart processing section 76 can suggest a plurality of the return methods by adopting mutually different return routes and/or return items (at least one of the moving direction and the return position of the work vehicle 1). The restart processing section 76 determines whether to allow returning by using the return method in an order of priority of the plural return methods. Then, when it is determined that returning cannot be performed by the return method, returning is performed by using the next return method.

For example, when the return operation is performed by the return method in which the moving direction of the work vehicle 1 is set to "forward" according to the moving direction illustrated in FIG. 20, the return of the work vehicle 1 onto the travel route is possibly hindered due to the presence of the local obstacle point, such as the "mud" or the "step" (including the dent), on the return route R4 or due to the steep inclination. In such a case, the return operation is performed by another return method in which the moving direction of the work vehicle 1 in the return operation is set to "reverse". As a result, the work vehicle can return onto the travel route promptly and reliably.

Here, in the case where returning by the one return method fails for a predetermined number of times, it is preferably determined that returning by such a return method is impossible. The "predetermined number of times" described herein is any number of times that is once or greater. **In** the present embodiment, the predetermined number of times is set to twice or greater (plural times). More specifically, in the case where the work vehicle 1 cannot return onto the travel route after performing the return operation, the count is incremented. Then, when the number of the counts reaches the predetermined number of times, it is determined that returning is impossible, and the return method is switched to the next return method. The number of the counts is reset when the work vehicle 1 returns onto the travel route or when the return method is changed.

In this way, the return operation by the one return method is attempted for the plural times. Then, in the case where returning is impossible even after the attempts, the return operation is performed by using the next return method. Meanwhile, in the case where the work vehicle 1 can return onto the travel route, but the route deviation occurs again within a predetermined range from the point at which the last route deviation has occurred, and the same return method is used at the time, the count is incremented in the same manner as that of the case where returning is impossible.

### [3.5] Route Display Screen

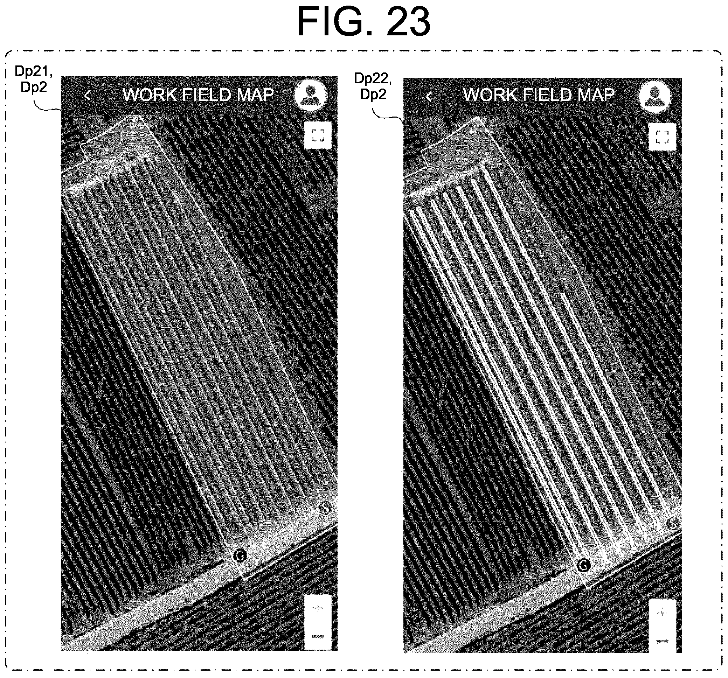

Next, a description will be made on a route display screen Dp2, which is displayed on the display processing section 77, with reference to FIG. 23 to FIG. 25.

The route display screen Dp2 is a screen that is displayed on, for example, the display section 211 of the first manipulation terminal 210, the display section 611 of the user interface 61, or the like by the display processing section 77. The "screen" such as the route display screen Dp2 described in the present invention means an image (a picture) that is displayed on the display section 211 or the like, and includes a figure, a graphic, a photograph, text, a moving image, and the like. Here, in the case where the screen includes the moving image or the like, the screen includes not a fixed image but an image that changes at every moment. In the drawing such as FIG. 23 that illustrates the route display screen Dp2, lead lines and reference numerals are merely given for description, and are not actually displayed on the display section 211 or the like. Design, arrangement, and a size of an object on the route display screen Dp2 described below merely constitute one example and can be changed appropriately.

That is, the travel control method according to the present embodiment further includes displaying the route display screen Dp2 including the work route R1 on the display section 211 (or 611). On the route display screen Dp2, a display mode is distinguished between the forward travel and the reverse travel of the work vehicle 1. In the present embodiment, as an example, not only the work route R1 but also the entire target route R10 (travel route) including the travel routes R2 can be displayed on the route display screen Dp2.

FIG. 23 illustrates a route display screen Dp21 and a route display screen Dp22, each of which is the route display screen Dp2 before the start of the work (the automatic travel), the route display screen Dp21 being provided for a case of only the forward travel, and the route display screen Dp22 being provided for a case including the reverse travel. The target route R10 is superimposed and displayed on a map (including an aerial photograph or the like) of the field F1. As illustrated in FIG. 23, a route on which the work vehicle 1 travels forward and a route on which the work vehicle 1 travels reversely are displayed in different display colors, for example. As an example, the route on which the work vehicle 1 travels forward is displayed in "gray", and the route on which the work vehicle 1 travels reversely is displayed in "orange".

As a result, by looking at the route display screen Dp2, the manipulator can grasp the movement of the work vehicle 1 in the entire work on the field F1 (before the start of the work), and in particular, can separately grasp the forward travel and the reverse travel.

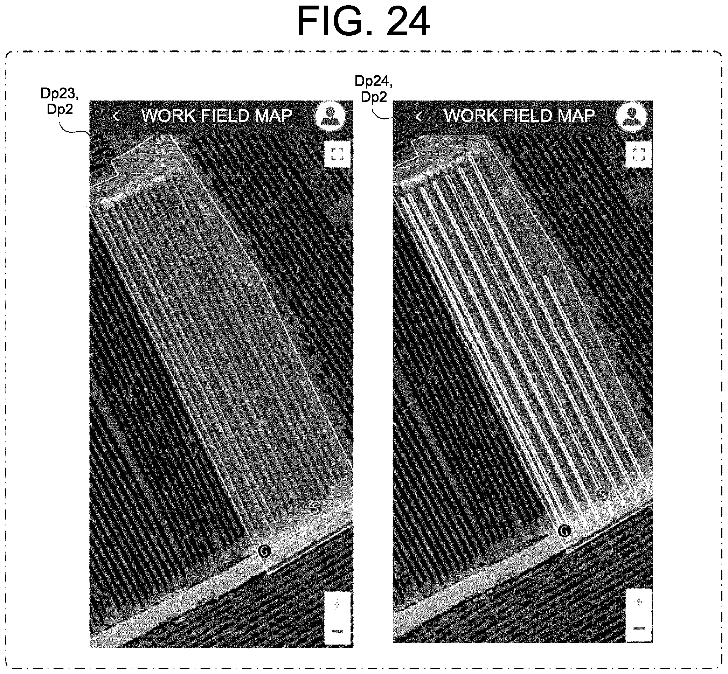

Furthermore, on the route display screen Dp2, the display mode is changed between the target route R10 that has not been traveled (not worked) and the route (work history) that has been traveled (worked). FIG. 24 illustrates the route display screen Dp2 at the time when the route deviation occurs in the middle of the work (the automatic travel) and the automatic travel is restarted from an intermediate portion of the target route R10, the route display screen Dp2 including a route display screen Dp23 in the case of only the forward travel and a route display screen Dp24 in the case including the reverse travel such as the non-turning reciprocating travel. As illustrated in FIG. 24, the untraveled (unworked) target route R10 and the traveled (worked) route are displayed in different display colors, for example. As an example, in regard to the route on which the work vehicle 1 travels forward, a traveled section is displayed in "blue". In regard to the route on which the work vehicle 1 travels reversely, a traveled section is displayed in "green". In this way, whether the route has been traveled (worked) is visualized.

Here, when the work is interrupted in the middle due to a reason such as the route deviation, on the route display screen Dp2, the work route R1, on which the work is interrupted, is preferably distinguished from the other work route R1. As an example, as illustrated in FIG. 24, the work route R1, on which the work is interrupted, is displayed in the different color, such as "red", from the other work route R1. In this way, it is possible to grasp from which the next work should be restarted (started) and grasp presence or absence of the work route R1 on which the work is interrupted (that is, the work route R1 that should be worked again).

In addition, on the route display screen Dp2, a position at which the automatic travel of the work vehicle 1 is stopped is preferably displayed in an identifiable manner. For example, by displaying the position at which the automatic travel of the work vehicle 1 is stopped by using an icon or the like, the manipulator can be notified of the position at which the work vehicle 1 is stopped. Furthermore, it is possible to grasp at which position the work vehicle 1 is stopped frequently. Such information can be used as a reference for future planning such as soil improvement.

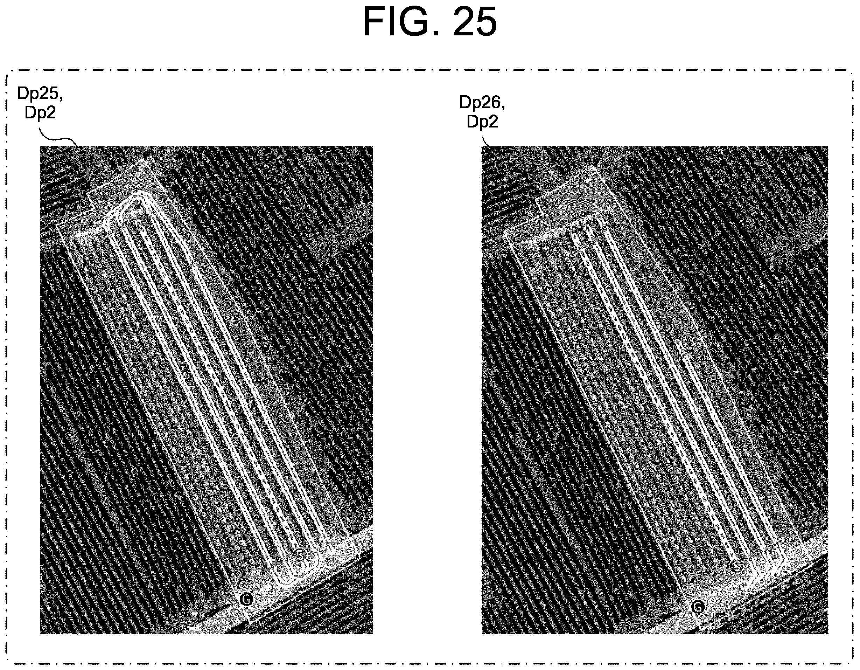

Further, in addition to or instead of the display color, for example, as illustrated in FIG. 25, the display mode of the route may be distinguished by line type (a solid line/a broken line/a one-dot chain line, or the like) and a symbol (an arrow/a figure, or the like). FIG. 25 illustrates the route display screen Dp2 at the time when the route deviation occurs in the middle of the work (the automatic travel) and the automatic travel is restarted from the intermediate portion of the target route R10, the route display screen Dp2 including a route display screen Dp25 in the case of only the forward travel and a route display screen Dp26 in the case including the reverse travel such as the non-turning reciprocating travel. In this way, even when it is difficult to distinguish the route display by color, the route display can be distinguished easily.

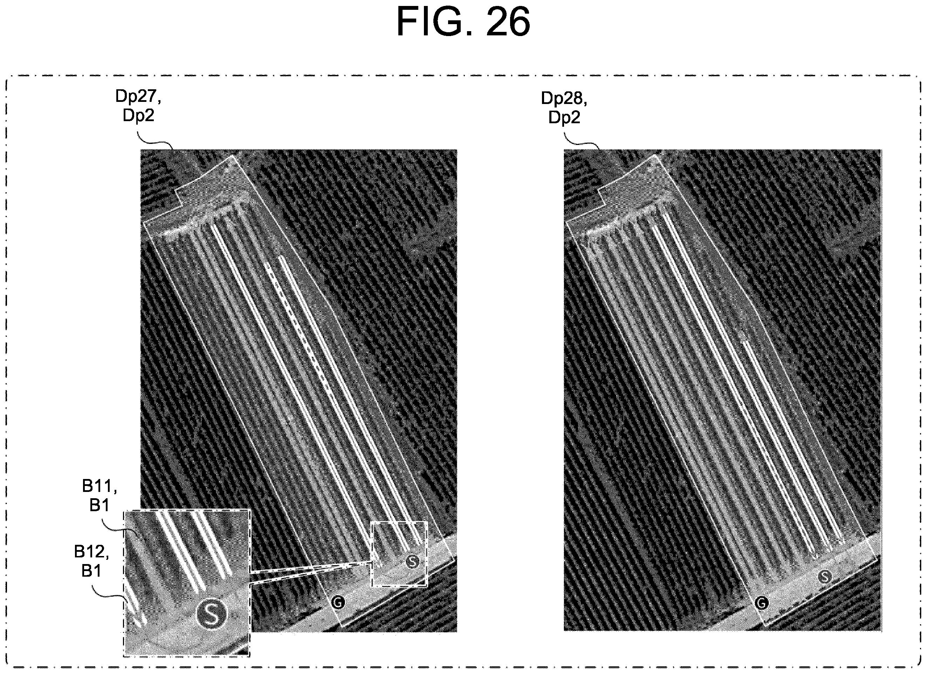

As illustrated in FIG. 26, the display mode of the route may be distinguished between the route on which the work vehicle 1 performs the work (the spraying work as an example) and the route on which the work vehicle 1 does not perform the work. FIG. 26 illustrates the route display screen Dp2 in the middle of the work (the automatic travel), the route display screen Dp2 including a route display screen Dp27 in the case of only the forward travel and a route display screen Dp28 in the case including the reverse travel such as the non-turning reciprocating travel. A partially enlarged view of the route display screen Dp27 is displayed in a balloon. In the example illustrated in FIG. 26, a white band B1 is superimposed and displayed on the route on which the work is performed, and the white band B1 is not superimposed and displayed on the route on which the work is not performed. In this way, the display modes of both of the routes are distinguished from each other. That is, for example, in regard to the route (the non-work route), such as the travel route R2, on which the work vehicle 1 does not perform the work and moves between the crop rows Vr1, the display mode is distinguished from that of the route on which the work vehicle 1 performs the work while traveling. In this way, a range where the work is performed in the field F1 can be visually recognized. Also, in regard to the work route R1, the section in which the work vehicle 1 does not perform the work is displayed in the display mode of the route on which the work vehicle 1 does not perform the work.

Furthermore, in FIG. 26, in regard to the route on which the work is performed, the untraveled (unworked) route and the traveled (worked) route are distinguished by transparency (density, the display color, or the like) of the white band B1, for example. More specifically, of the route on which the work is performed, a white band B11 is superimposed and displayed on an untraveled section, and a white band B12 is superimposed and displayed on a traveled section. In this way, the display modes of both of the routes are distinguished from each other. As a result, it is possible to visualize how many routes have been traveled (worked) among the routes on which the work is performed in the field F1, that is, a degree of progress of the work.

### [4] Modified Examples

Hereinafter, modified examples of the first embodiment will be listed. The modified examples, which will be described below, can be appropriately combined and implemented.

The controller 7 in the present invention includes the computer system. The computer system has, as main components, the one or more processors as hardware and one or more pieces of the memory. When the processor executes the program that is stored in the memory of the computer system, the function as the controller 7 in the present invention is implemented. The program may be previously recorded in the memory of the computer system, may be provided through an electric communication line, or may be provided by being recorded in a non-transitory recording medium readable by the computer system, such as a memory card, an optical disk, or a hard disk drive. In addition, some or all of the functional sections included in the controller 7 may be configured by electronic circuits.

The consolidation of at least some of the functions of the controller 7 into the single casing is not an essential configuration of the controller 7. The components of the controller 7 may separately be provided in the plural casings. On the contrary, the functions that are separately provided to the plural devices (for example, the controller 7 and the first manipulation terminal 210) may be integrated in the single casing for the controller 7. Furthermore, at least some of the functions of the controller 7 may be implemented by a cloud (cloud computing) or the like.

The work vehicle 1 may be used for the work at the work sites that are not limited to the orchard such as the vineyard or the apple orchard but also include another type of the field F1 and the work site other than the field F1. The spray material that is sprayed by the work vehicle 1 is not limited to the chemical solution, and may be water, the fertilizer, a disinfectant solution, another type of the solution, powder, or the like, for example. Similarly, the spray target on which the spray material is sprayed is not limited to the grape tree, and may be another type of the crop or an object other than the crop (including an inorganic matter). The work vehicle 1 is not limited to an unmanned machine that is operated by the automatic operation. The work vehicle 1 may be configured to be operated by the manipulation (including the remote operation) by the person (the manipulator). For example, the work vehicle 1 may be of a passenger type (a manned machine) that the manipulator can get in. Also, in this case, the work vehicle 1 is provided with the antenna 21 and the like in order to grasp the current position of the work vehicle 1.

The support frame 3 only needs to be attached to the one end portion in the front-rear direction D3 of the machine body 10, and may be attached to the front portion of the machine body 10. In this case, the work machine 400 that is supported by the support frame 3 is also arranged not in the rear portion but in the front portion of the machine body 10.

The work machine 400 (the sprayer 401 or the weeder) only needs to be attached to the machine body 10 of the work vehicle 1, and is not necessarily supported by the support frame 3. That is, at least one of the sprayer 401 and the weeder may be directly supported by the machine body 10 without using the support frame 3.

In addition, a specific way for notification and presentation is not limited to display on the display section 211 of the first manipulation terminal 210, and may be display on another display section, sound, transmission to an external terminal, other ways, or a combination thereof.

The work vehicle 1 may include the paired work machines 400 that are aligned in the front-rear direction D3. In this way, the work vehicle 1 can perform the work with each of the paired work machines 400 aligned in the front-rear direction D3. As a result, the work efficiency can be improved when compared to the case where the work is performed only with any one of the work machines 400. The work vehicle 1 may further include a rotational drive device that generates rotary power to rotate the support frame 3 about the rotation axis Ax1 with respect to the machine body 10.

The machine body 10 only needs to have the first block 10L and the second block 10R aligned in the right-left direction D2, and the arrangement of the first block 10L and the second block 10R may be reversed in the right-left direction D2. In detail, the first block 10L that is provided with the power source 63 and the like may be located on the right side while the second block 10R that is provided with the user interface 61 and the like may be located on the left side.

The travel section 11 is not limited to the crawler-type travel device and may be configured to have one or more wheels and travel with rotation of the one or more wheels. In addition, the configuration of the travel section 11 is not limited to the configuration that the travel section 11 is driven by the hydraulic motor. The travel section 11 may be configured to be driven by an electric motor, for example.

The sprayer 401 as the work machine 400 is not limited to the air-assisted sprayer as in the first embodiment. For example, the sprayer 401 may be a sprayer of an electrostatic spraying type, a type combining the air-assisting type and the electrostatic spraying type, or the like.

The power source 63 is not limited to the engine. The power source 63 may have a motor (an electric motor), for example, or may be a hybrid power source including the engine and the motor.

The work vehicle 1 may be in a mode that the machine body 10 does not have the gate shape, but the entire machine body 10 travels (on the work path) between the pair of the adjacent crop rows Vr1. In this case, the work vehicle 1 travels on each of the work paths without straddling the crop row Vr1. In this case, the sprayer 401 performs the spraying work by switching the spray pattern among the spray pattern in which the sprayer 401 sprays the chemical solution on both of the crop rows Vr1 in the right-left direction D2, the spray pattern in which the sprayer 401 sprays the chemical solution only on the left crop row Vr1, and the spray pattern in which the sprayer 401 sprays the chemical solution only on the right crop row Vr1.

### [Supplementary Notes of the Invention]

Hereinafter, the overview of the invention extracted from the above-described embodiment will be supplementarily described. Configurations and processing functions described in the following supplementary notes may be selected and combined as appropriate.

### <Supplementary Note 1>

A travel control method for a work vehicle includes:
acquiring a slip condition related to a slip that occurs during travel of a work vehicle; and
changing an acceleration upper limit value according to the slip condition, the acceleration upper limit value being an upper limit value of acceleration until a vehicle speed of the work vehicle reaches a target speed.

### <Supplementary Note 2>

The travel control method for a work vehicle according to Supplementary Note 1, in which
the slip condition includes a condition related to an inclination in a front-rear direction of the work vehicle.

### <Supplementary Note 3>

The travel control method for a work vehicle according to Supplementary Note 2, in which
the acceleration upper limit value is reduced as the inclination of the work vehicle is increased.

### <Supplementary Note 4>

The travel control method for a work vehicle according to any one of Supplementary Notes 1 to 3, in which
the acceleration upper limit value is validated only during a limitation target time that includes one of an acceleration time and a deceleration time of the work vehicle.

### <Supplementary Note 5>

The travel control method for a work vehicle according to Supplementary Note 4, in which
the acceleration time or the deceleration time of the work vehicle is selected as the limitation target time according to a direction of the inclination with respect to a travel direction of the work vehicle.

### <Supplementary Note 6>

The travel control method for a work vehicle according to Supplementary Note 5, in which
when the inclination is upward with respect to the travel direction of the work vehicle, the acceleration time is set as the limitation target time, and
when the inclination is downward with respect to the travel direction of the work vehicle, the deceleration time is set as the limitation target time.

### <Supplementary Note 7>

The travel control method for a work vehicle according to any one of Supplementary Notes 1 to 6, in which
at least one of ON/OFF and a magnitude of a change of the acceleration upper limit value can be set as a setting item.

### <Supplementary Note 8>

The travel control method for a work vehicle according to Supplementary Note 7, in which
the setting item is set according to a manipulation by a user.

### <Supplementary Note 9>

The travel control method for a work vehicle according to any one of Supplementary Notes 1 to 8 further including:
causing the work vehicle to travel automatically, in which
the acceleration upper limit value is the upper limit value of the acceleration at the time of bringing the current speed to the target vehicle speed during automatic travel of the work vehicle.

### <Supplementary Note 10>

The travel control program for causing one or more processors to execute
the travel control method for a work vehicle according to any one of Supplementary Notes 1 to 9.

### REFERENCE SIGNS LIST

1 Work vehicle
10 Machine body
11 Travel section
71 Acquisition process section
74 Change processing section
100 Travel control system
D3 Front-rear direction

## Claims

1. A travel control method for a work vehicle, the travel control method comprising:
acquiring a slip condition related to a slip that occurs during travel of a work vehicle; and
changing an acceleration upper limit value according to the slip condition, the acceleration upper limit value being an upper limit value of acceleration until a vehicle speed of the work vehicle reaches a target speed.

2. The travel control method for a work vehicle according to claim 1, wherein
the slip condition includes a condition related to an inclination in a front-rear direction of the work vehicle.

3. The travel control method for a work vehicle according to claim 2, wherein
the acceleration upper limit value is reduced as the inclination of the work vehicle is increased.

4. The travel control method for a work vehicle according to any one of claims 1 to 3, wherein
the acceleration upper limit value is validated only during a limitation target time that includes one of an acceleration time and a deceleration time of the work vehicle.

5. The travel control method for a work vehicle according to claim 4, wherein
the acceleration time or the deceleration time of the work vehicle is selected as the limitation target time according to a direction of the inclination with respect to a travel direction of the work vehicle.

6. The travel control method for a work vehicle according to claim 5, wherein
when the inclination is upward with respect to the travel direction of the work vehicle, the acceleration time is set as the limitation target time, and
when the inclination is downward with respect to the travel direction of the work vehicle, the deceleration time is set as the limitation target time.

7. The travel control method for a work vehicle according to any one of claims 1 to 3, wherein
at least one of ON/OFF and a magnitude of a change of the acceleration upper limit value can be set as a setting item.

8. The travel control method for a work vehicle according to claim 7, wherein
the setting item is set according to a manipulation by a user.

9. The travel control method for a work vehicle according to any one of claims 1 to 3 further comprising:
causing the work vehicle to travel automatically, wherein
the acceleration upper limit value is the upper limit value of the acceleration at the time of bringing the current speed to the target vehicle speed during automatic travel of the work vehicle.

10. A travel control program for causing one or more processors to execute
the travel control method for a work vehicle according to any one of claims 1 to 3.

11. A travel control system comprising:
an acquisition processing section that acquires a slip condition related to a slip that occurs during travel of a work vehicle; and
a change processing section that changes an acceleration upper limit value according to the slip condition, the acceleration upper limit value being an upper limit value of acceleration until a vehicle speed of the work vehicle reaches a target speed.

12. A work vehicle comprising:
the travel control system according to claim 11; and
a travel section that is controlled by the travel control system.
